(19)

Europäisches
Patentamt
European
Patent Office
Office européen
des brevets

(11) **EP 2 211 301 A1**

(12) **EUROPEAN PATENT APPLICATION**

(43) Date of publication:
    **28.07.2010 Bulletin 2010/30**

(51) Int Cl.:
    ***G06Q 30/00*** (2006.01)

(21) Application number: **10000776.4**

(22) Date of filing: **26.01.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS** | (71) Applicant: **The Nielsen Company (US), LLC**<br>**Schaumburg, IL 60173 (US)** |
| (30) Priority: **26.01.2009 US 147363 P**<br>**11.12.2009 US 636356** | (72) Inventor: **Luff, Robert**<br>**Wittman**<br>**Maryland 21676 (US)** |
| | (74) Representative: **Samson & Partner**<br>**Widenmayerstrasse 5**<br>**80538 München (DE)** |

(54) **Methods and apparatus to monitor media exposure using content-aware watermarks**

(57)    Methods and apparatus to construct and transmit content-aware watermarks are disclosed herein. An example method of creating a content-aware watermark includes selecting at least one word associated with a media composition; representing the word with at least one phonetic notation; obtaining a proxy code for each phonetic notation; and locating the proxy code in the content-aware watermark.

FIG. 1

**Description**

RELATED APPLICATION

This patent claims the benefit of U.S. Provisional Patent Application Serial No. 61/147,363, filed January 26, 2009, which is hereby incorporated herein in its entirety.

FIELD OF THE DISCLOSURE

The present disclosure relates generally to audience measurement and, more particularly, to methods and apparatus to monitor media exposure using content-aware watermarks.

BACKGROUND

Media-centric companies are often interested in tracking the number of times that audience members are exposed to media compositions (e.g., television programs, motion pictures, internet videos, radio programs, etc.). To track such exposures, companies often generate audio and/or video signatures (e.g., a representation of some, preferably unique, portion of the media composition or the signal used to transport the media composition) of media compositions that can be used to determine when those media compositions are presented to audience members. Additionally, companies broadcast identification codes with media compositions to monitor presentation of those media compositions to audience members by comparing identification codes retrieved from media compositions presented to audience members with reference to identification codes stored in a reference database in association with information descriptive of the media compositions. These identification codes can also be referred to as watermarks.

SUMMARY

An example method of creating a content-aware watermark includes selecting at least one word associated with a media composition. Further, the example method includes representing the word with at least one phonetic notation. Further, the example method includes obtaining a proxy code for each phonetic notation. Further, the example method includes locating the proxy code in the content-aware watermark.
In some examples, the method includes encoding the content-aware watermark into the media composition or into a signal representative of the media composition.
In some examples, the method includes associating the watermark with the media composition.
In some examples, the at least one phonetic notation represents an approximate pronunciation of the word.
In some examples, obtaining the proxy code includes referencing a code book using the at least one phonetic notation.
In some examples, representing the word with the at least one phonetic notations includes breaking the word down into the at least one phonetic notation according to the International Phonetic Alphabet.
In some examples, the at least one word is descriptive of content in the media composition.
In some examples, the word is present in at least one of an audio track of the media composition, a closed captioning track of the media composition, an image of the media composition, or metadata of the media composition.
In some examples, the word is representative of at least one of a product shown in the media composition, a person shown in the media composition, a character shown in the media composition, a topic discussed in the media composition, a type of product shown in the media composition, a brand shown in the media composition, a media feature, or a blank frame.
In some examples, the method includes detecting the content-aware watermark at a media consumption site, extracting the proxy code from the detected watermark, and converting the extracted proxy code to the at least one phonetic notation.
In some examples, converting the extracted proxy code includes comparing the proxy code for each of the at least one phonetic notations to a plurality of proxy codes in a database.
In some examples, the method includes reassembling the word from the at least one phonetic notation.
An example apparatus includes a first data interface to receive a media composition. Further, the example apparatus includes a word selector to select at least one word associated with the media composition. Further, the example apparatus includes a first phonetic converter to represent the word with at least one phonetic notation. Further, the example apparatus includes a proxy code selector to obtain a proxy code for the at least one phonetic notation. Further, the example apparatus includes a proxy code inserter to locate the proxy code in a watermark.
In some examples, the apparatus includes a watermark embedder to associate the watermark with the media composition.

In some examples, the at least one phonetic notation represents an approximate pronunciation of the word.

In some examples, the first phonetic converter breaks the word down into the at least one phonetic notation according to the International Phonetic Alphabet.

In some examples, the word is descriptive of content in the media composition data.

In some examples, the word is indicative of at least one of a product shown in the media composition, a person shown in the media composition, a character shown in the media composition, a topic discussed in the media composition, a type of product shown in the media composition, a brand shown in the media composition, a media feature, or a blank frame.

An example tangible machine accessible medium has instructions stored thereon that, when executed, cause a machine to select at least one word associated with a media composition. Further, the example tangible machine accessible medium has instructions stored thereon that, when executed, cause a machine to represent the word with at least one phonetic notation. Further, the example tangible machine accessible medium has instructions stored thereon that, when executed, cause a machine to obtain a proxy code for each phonetic notation. Further, the example tangible machine accessible medium has instructions stored thereon that, when executed, cause a machine to locate the proxy code in a content-aware watermark.

In some examples, the tangible machine accessible medium has instructions stored thereon that, when executed, cause a machine to associate the watermark with the media composition.

In some examples, the phonetic notation represents an approximate pronunciation of the word.

In some examples, the tangible machine accessible medium has instructions stored thereon that, when executed, cause a machine to obtain the proxy code by referencing a code book using the at least one phonetic notation.

In some examples, the tangible machine accessible medium has instructions stored thereon that, when executed, cause a machine to represent the word with the at least one phonetic notation by breaking the word down into the at least one phonetic notation according to the International Phonetic Alphabet.

In some examples, the at least one word is descriptive of content in the media composition.

In some examples, the word is present in at least one of an audio track of the media composition, a closed captioning track of the media composition, an image of the media composition, or metadata of the media composition.

In some examples, the at least one word is indicative of a product shown in the media composition, a person shown in the media composition, a character shown in the media composition, a topic discussed in the media composition, a type of product shown in the media composition, a brand shown in the media composition, a media feature, or a blank frame.

An example method of decoding a content-aware watermark includes extracting a proxy code from the content-aware watermark, wherein the proxy code comprises a representation of at least one phonetic notation. Further, the example method includes determining the at least one phonetic notation represented by the proxy code. Further, the example method includes converting the at least one phonetic notation into at least one keyword.

In some examples, determining the at least one phonetic notation represented by the proxy code includes looking up the proxy code in a code book having a set of correlations between a set of proxy codes and a set of phonetic notations.

In some examples, the at least one keyword is descriptive of content in a media composition associated with the content-aware watermark.

In some examples, converting the at least one phonetic notation into the at least one keyword includes combining the at least one phonetic notation with a second phonetic notation.

In some examples, the method includes detecting a first indication indicative of a start of the keyword and detecting a second indication indicative of an end of the keyword, wherein the first and second indications are embedded in the content-aware watermark.

An example apparatus includes a data extractor to extract a proxy code from a content-aware watermark, wherein the proxy code comprises a representation of at least one phonetic notation. Further, the example apparatus includes a translator to determine the at least one phonetic notation represented by the proxy code. Further, the example apparatus includes a converter to convert the at least one phonetic notation into at least one keyword.

In some examples, the translator is operative to communicate with a code book to determine the at least one phonetic notation represented by the proxy code by looking up the proxy code in the code book, wherein the code book has a set of correlations between a set of proxy codes and a set of phonetic notations.

In some examples, the at least one keyword is descriptive of content in a media composition associated with the content-aware watermark.

In some examples, the converter combines the at least one phonetic notation with a second phonetic notation.

An example tangible machine accessible medium has instructions stored thereon that, when executed, cause a machine to extract a proxy code from a content-aware watermark, wherein the proxy code comprises a representation of at least one phonetic notation. Further, the example tangible machine accessible medium has instructions stored thereon that, when executed, cause a machine to determine the at least one phonetic notation represented by the proxy code. Further, the example tangible machine accessible medium has instructions stored thereon that, when executed, cause a machine to convert the at least one phonetic notation into at least one keyword.

In some examples, the tangible machine accessible medium has instructions stored thereon that, when executed, cause the machine to determine the at least one phonetic notation represented by the proxy code by looking up the proxy code in a code book having a set of correlations between a set of proxy codes and a set of phonetic notations.

In some examples, the at least one keyword is descriptive of content in a media composition associated with the content-aware watermark.

In some examples, the tangible machine accessible medium has instructions stored thereon that, when executed, cause the machine to convert the at least one phonetic notation into the at least one keyword by combining the at least one phonetic notation with a second phonetic notation.

In some examples, the tangible machine accessible medium has instructions stored thereon that, when executed, cause the machine to detect a first indication indicative of a start of the keyword and detecting a second indication indicative of an end of the keyword, wherein the first and second indications are embedded in the content-aware watermark.

An example method of creating a code book includes identifying a word. Further the example method includes searching through a set of media compositions to identify a number of instances of the word. Further, the example method includes associating a frequency value with the word according to the number of instances of the word in relation to an amount of data in the set of media compositions. Further, the example method includes selecting a proxy code based to be associated with the word based on the frequency value. Further, the example method includes storing the proxy code in association with the word in the code book.

In some examples, the set of media compositions is a combination of media compositions broadcast over a period of time.

In some examples, selecting the proxy code includes selecting one of a first set of proxy codes to be associated with the word when the frequency value is higher than a second frequency value associated with a second word, wherein the first set of proxy codes includes proxy codes of a smaller size compared to proxy codes of a second set of proxy codes.

An example code book generator includes a word identifier to identify a word. Further, the example code book generator includes a parser to search through a set of media compositions to identify a number of instances of the word. Further, the example code book generator includes a calculator to associated a frequency value with the word according to the number of instances of the word in relation to an amount of data in the set of media compositions. Further, the example code book generator includes a selector to select a proxy code to be associated with the word based on the frequency value. Further, the example code book generator includes a memory to store the proxy code in association with the word in a code book.

In some examples, the set of media compositions is a combination of media compositions broadcast over a period of time.

In some examples, the selector is to select the proxy code by selecting one of a first set of proxy codes to be associated with the word when the frequency value is higher than a second frequency value associated with a second word, wherein the first set of proxy codes includes proxy codes of a smaller size compared to proxy codes of a second set of proxy codes.

An example tangible machine accessible medium has instructions stored thereon that, when executed, cause a machine to identifying a word. Further, the example tangible machine accessible medium has instructions stored thereon that, when executed, cause a machine to search through a set of media compositions to identify a number of instances of the word. Further, the example tangible machine accessible medium has instructions stored thereon that, when executed, cause a machine to associate a frequency value with the word according to the number of instances of the word in relation to an amount of data in the set of media compositions. Further, the example tangible machine accessible medium has instructions stored thereon that, when executed, cause a machine to select a proxy code based to be associated with the word based on the frequency value. Further, the example tangible machine accessible medium has instructions stored thereon that, when executed, cause a machine to store the proxy code in association with the word in a code book.

In some examples, the set of media compositions is a combination of media compositions broadcast over a period of time.

In some examples, the tangible machine accessible medium has instructions stored thereon that, when executed, cause the machine to select the proxy code by selecting one of a first set of proxy codes to be associated with the word when the frequency value is higher than a second frequency value associated with a second word, wherein the first set of proxy codes includes proxy codes of a smaller size compared to proxy codes of a second set of proxy codes.

An example method of encoding a media composition includes selecting at least one word associated with the media composition, the word being descriptive of media content occurring at a first time within the media composition. Further, the example method includes obtaining a proxy code associated with the word from a code book. Further, the example method includes inserting the proxy code into a portion of an audience measurement code containing a timestamp corresponding to the first time.

In some examples, the audience measurement code comprises a proxy code field, a source identifier field, and a timestamp field.

In some examples, the audience measurement code is a content-aware code, and the content-aware code has substantially a same amount of bits as a non-content-aware code.

In some examples, the portion comprises a source identifier portion of the audience measurement code.

In some examples, the audience measurement code is psycho-acoustically encoded in the media composition data.

In some examples, inserting the proxy code includes at least one of appending the proxy code to a source identifier of the audience measurement code or prepending the proxy code to the source identifier of the audience measurement code.

In some examples, a size of the source identifier is reduced to accommodate the proxy code.

An example tangible machine accessible medium has instructions stored thereon that, when executed, cause a machine to select at least one word associated with the media composition, the word being descriptive of media content occurring at a first time within the media composition. Further, the example tangible machine accessible medium has instructions stored thereon that, when executed, cause a machine to obtain a proxy code associated with the word from a code book. Further, the example tangible machine accessible medium has instructions stored thereon that, when executed, cause a machine to insert the proxy code into a portion of an audience measurement code containing a timestamp corresponding to the first time.

In some examples, the audience measurement code comprises a proxy code field, a source identifier field, and a timestamp field.

In some examples, the audience measurement code is a content-aware code, and the content-aware code has substantially a same amount of bits as a non-content-aware code.

In some examples, the portion comprises a source identifier portion of the audience measurement code.

In some examples, the audience measurement code is psycho-acoustically encoded in the media composition data.

In some examples, inserting the proxy code includes at least one of appending the proxy code to a source identifier of the audience measurement code or prepending the proxy code to the source identifier of the audience measurement code.

In some examples, a size of the source identifier is reduced to accommodate the proxy code.

BRIEF DESCRIPTION OF THE DRAWINGS

FIG. 1 illustrates an example media network system used to encode media compositions or media presentations (e.g., audio files, media files, audio streams, video streams, etc.) with content-aware watermarks, to transmit the encoded content to audience members, and to decode the content-aware watermarks to collect audience measurement data.

FIG. 2A depicts an example media excerpt to be used by a content-aware watermark encoder of FIG. 1 to generate a content-aware watermark.

FIG. 2B illustrates an example conventional audience measurement code.

FIG. 2C illustrates an example content aware watermark.

FIG. 2D illustrates another example content aware watermark.

FIG. 2E illustrates still another example content aware watermark.

FIG. 3 is a block diagram of an example apparatus that may be used to implement the example content-aware watermark encoder of FIGS. 1 and 2.

FIG. 4A is a block diagram of an example apparatus that may be used to implement the example content-aware watermark decoder of FIG. 1 shown in communication with the example central facility of FIG. 1.

FIG. 4B is a block diagram of an example apparatus that may be used to generate the example code book of FIGS. 1 and 4A.

FIGS. 5A and 5B are a flow diagram representative of example machine readable instructions that may be executed to implement the example content-aware watermark encoder of FIGS. 1-3 to construct content-aware watermarks and to embed the content-aware watermarks into media compositions.

FIG. 6 is a flow diagram representative of example machine readable instructions that may be executed to implement the example content-aware watermark decoder of FIGS. 1 and 4A to detect, decode, and transmit information associated with content-aware watermarks.

FIG. 7 is a flow diagram representative of example machine readable instructions that may be executed to implement the example central facility of FIGS. 1 and 4A to process information received from the example decoder of FIGS. 1 and 4A.

FIG. 8 is a flow diagram representative of example machine readable instructions that may be executed to implement the example code book of FIGS. 1, 4A, and/or 4B to associate one or more proxy codes with one or more keywords.

FIG. 9 is a block diagram of an example processor system that may be used to execute the machine readable instructions of FIGS. 5A and 5B to implement the encoder of FIGS. 1-3, to execute the machine readable instructions of FIG. 6 to implement the decoder of FIGS. 1 and 4A, to execute the machine readable instructions of FIG. 7 to implement the example central facility of FIGS. 1 and 4A, and/or to execute the machine readable instructions of FIG. 8 to implement the example code book of FIGS. 1,4A, and/or 4B.

DETAILED DESCRIPTION

Although the following discloses example methods, apparatus, systems, and/or articles of manufacture including, among other components, firmware and/or software executed on hardware, it should be noted that such methods, apparatus, systems, and/or articles of manufacture are merely illustrative and should not be considered as limiting. For example, it is contemplated that any or all of these firmware, hardware, and/or software components could be embodied exclusively in hardware, exclusively in software, exclusively in firmware, or in any combination of hardware, software, and/or firmware. Accordingly, while the following describes example methods, apparatus, systems, and/or articles of manufacture, the examples provided are not the only way(s) to implement such methods, apparatus, systems, and/or articles of manufacture.

The example methods, apparatus, systems, and/or articles of manufacture described herein can be used to construct, encode, transmit, and/or decode watermarks. A watermark is information (e.g., a code) that is embedded in or otherwise associated with audio/video content prior to broadcast. The watermarks described herein can be extracted and/or collected at a downstream location (e.g., a monitored home or business) to enable identification of the audio and/or video content, the source of the audio and/or video content, and/or the specific content of the audio and/or video content. In some instances, a watermark may be used to establish ownership of audio/video media content. In such instances, the watermark is directly or indirectly indicative of a particular content owner and/or licensee. Additionally or alternatively, in some examples, a watermark can be used to identify the associated audio/video media composition and/or the source (e.g., distributor) of the same by comparing the watermark to codes stored in a reference database in association with respective audio/video identifiers (e.g., titles, program names, etc.) and/or source names (e.g., Cable News Network (CNN™)).

In the past, other than referencing the program in general (e.g., the program title or the station broadcasting the program), watermarks did not include information that alone was indicative of the specific content (e.g., characters, plot, product placements, etc.) of the audio and/or video media compositions with which the watermarks were associated. In contrast, as described in commonly assigned U.S. Patent Application No. 12/101,738, which is incorporated herein by reference in its entirety, content-aware watermarks include and/or refer to descriptive information representing the specific audio/video content of their respective media compositions at specific points in time. In other examples, the content-aware watermarks may include content-descriptive information generally corresponding to the locations in the audio/video composition at which the content-aware watermarks are embedded or otherwise associated with. For example, a content-aware watermark associated with a scene of an audio/video program may identify a product or service (e.g., a soft drink, a financial service, a retail establishment chain, etc.) appearing (e.g., advertised) in that scene. Additionally or alternatively, a content-aware watermark embedded in or otherwise associated with audio/video content may include information indicative of a character (e.g., a role in a television program) and/or actor appearing (e.g., performing) in a scene that occurs at a time that occurs at generally the broadcast time of the content-aware watermark. Additionally or alternatively, a content-aware watermark embedded in or otherwise associated with audio/video content may include information indicative of a topic (e.g., current news, such as a political campaign or the participants thereof) being discussed in the content at a time that occurs at generally the broadcast time of the content-aware watermark.

To generate the content-descriptive information, an apparatus is configured to select certain words or phrases from the media content to be encoded. The words can be manually input/identified and/or automatically identified using, for example, closed captioning information, a speech-to-text converter, detected metadata (e.g., title, program name, international standard audiovisual number (ISAN), or any other identifier information), detected scene changes, detected blank frames or MPEG splice points, and/or detected logos. Preferably, the selected terms are representative of some aspect of the audio/video content of interest (e.g., embedded advertisement, actor, character, etc.). The selected word (s) or phrase(s) are then used as keyword(s) that are associated with a watermark. The watermark is then embedded into or otherwise associated with the media content for broadcast with the content.

The encoded content-aware watermarks can be used to detect when people or audience members are exposed to or consume particular media content associated with the content-aware watermarks. For example, a meter installed to monitor media exposure can detect the content-aware watermarks. The content-aware watermarks can be used (at the meter or at a central facility) to lookup keywords in a database to determine the product(s), advertisement(s), brand (s), character(s), and/or discussed topic(s) to which the household members were exposed. The extracted watermarks and/or keywords contained therein can be forwarded to a central facility via, for example, a network connection. The central facility performs one or more analyses using the extracted watermarks and/or keywords. Example analyses include developing specific ratings for scene(s), character(s), actor(s), brand(s), product(s), advertisement(s), topic(s), etc.

The above described content-aware watermarks and their advantages are fully disclosed in U.S. Patent Application Serial No. 12/101,738. It has been recognized by the inventors of the instant application that the noted content-aware watermarks, while advantageous in many respects, are difficult to utilize because of the severe bandwidth restrictions associated with encoding media content with audience measurement codes. In particular, it is very important to ensure that codes added to broadcast content do not perceptibly reduce the quality of the broadcast content and that the codes themselves are not humanly perceptible by audience members. To balance these concerns, the assignee of this patent has traditionally cooperated with broadcasters to encode broadcast content with masked or psycho-acoustically masked source identification codes comprising 38 bits every two and one-half seconds. In the past, the codes included six characters that identify the source of the content (e.g., the broadcaster's call sign such as ABC™). The remaining portion of the 38 bits were utilized to provide a timestamp substantially corresponding to a broadcast date and time (with time resolution at the seconds level).

The above encoding approach provides valuable audience measurement data. Because the codes are collectible by an audience measurement meter, the audience measurement entity operating the meter can identify the broadcaster and time of broadcast for every encoded media content exposed to the meter. By comparing the broadcaster and time of broadcast information extracted from the code to a schedule reflecting broadcast content by time and broadcaster, the audience measurement entity can specifically identify the media content to which the meter was exposed and, thus, draw conclusions about the media usage habits of populations of interest.

Due to the prevalence of remote control devices that enable audience members to easily change the channel tuned to by information presentation devices such as televisions by merely pushing a button, channel hopping (also colloquially referred to as "channel surfing") is common. As a result of such channel hopping, it is desirable to retain the granularity of the above-noted current audience measurement coding approach (i.e., transmitting the call sign and timestamp every two and one half seconds) to track channel changes that occur during channel hoping. Therefore, a challenge is presented as to how to utilize the above-noted content-aware watermarks without diluting the granularity of the current audience measurement approach while maintaining the imperceptibility to the human ear of existing codes.

One approach to this problem would be to add a second layer of encoding to the present audience measurement approach by, for example, encoding broadcast content with the content-aware watermarks at a different location of the signal without disturbing the current audience measurement coding approach. Thus, for example, the content-aware watermarks could be added as a second code to the audience measurement codes already employed (i.e., the codes reflecting the call sign and timestamp). One possible location for such a second code would be in a high frequency component of the video or audio portion of the broadcast signal. While it might not be practical to detect such a high frequency code in, for example, a monitored location such as an audience member's home or a restaurant, such a code could be detected at a dedicated audience measurement location such as by Nielsen's Monitor Plus locations (i.e., electronics in specific geographic locations that include a plurality of tuners dedicated to advertising monitoring).

Using a second code is disadvantageous in that it requires modifications to audience measurement meters (i.e., creating new meters and/or altering existing meters) to detect such codes. In addition, broadcasters are very reluctant to allow audience measurement companies to insert additional codes into their content due to concerns with possible negative effects on the quality of the viewer experience.

A second approach is to replace the existing audience measurement code (i.e., both the call sign and the timestamp) with a content-aware watermark containing the content to be tracked (e.g., nouns reflecting the actor name, the topic being discussed, keywords, products displayed in a corresponding scene, etc.) at some periodic or a-periodic intervals. However, such an approach inherently removes information from the existing audience measurement codes, thereby diluting the granularity of the information collected by the audience measurement system.

In view of the above noted concerns, the present disclosure seeks to modify the existing audience measurement coding approach to accommodate content-aware watermarks with little or no dilution in granularity such that channel changes associated with, for example, channel hoping, remain detectible. In particular, rather than inserting the terms for the content specific information being tracked into the watermarks, example systems, apparatus, methods, and articles of manufacture described herein either: (a) prepend or append a short proxy code to the call letter in the existing audience measurement code to create a content-aware watermark and employ a code book correlating the short proxy codes to the content to be tracked (e.g., words reflecting the actor name, the topic being discussed, keywords, products displayed in a corresponding scene, etc.) to decipher the meaning of the proxy code in the content-aware watermark, or (b) replace the call letter in the existing audience measurement code with the short proxy code and employ a code book correlating the short proxy codes to the content to be tracked to decipher the meaning of the proxy code in the content-aware watermark. Preferably, the size of the content-aware code (i.e., the original code modified to include the proxy codes) is the same or substantially the same as the size of the original code. As a result, the existing audience measurement coding approach is used to convey more information with little or no loss of granularity and without requiring substantial changes to the encoding and/or detecting apparatus and/or methodology of the existing audience measurement system.

The example methods, systems, apparatus, and/or articles of manufacture described herein enable content-descriptive keywords of the content-aware watermarks discussed above and in U.S. Patent Application Serial No. 12/101,738 to be efficiently encoded using proxy codes to, for example, decrease the amount of bandwidth needed to encode and/or transmit those keywords. In some instances, the proxy codes are mapped to sounds (e.g., phonetics or phonemes). For example, a word (e.g., a string of text) can be broken down into one or more sounds (e.g., phonetics or phonemes) that represent an approximate pronunciation of the word. The individual sounds can be represented by one or more symbols (e.g., characters or notations that are selected from a collection or library of phonetic notations, such as the International Phonetic Alphabet (IPA)). A unique proxy code (e.g., a value represented by, for example, a binary or hexadecimal word or digit) is then assigned to corresponding ones of the sounds (e.g., phonetic notations of the IPA). In some examples, the proxy codes and the associated phonetic notations are stored in a code book located at a central facility. The central facility may include a master code book encompassing all proxy codes, different code books for different types of media (e.g., movies, television programs, radio broadcasting, etc.), and/or different code books for different instances of media (e.g., one code book for a first television program and a second, different code book for a second television program).

In some implementations described herein, when an extracted keyword to be represented by a content-aware watermark is broken down into individual phonetic notations, the proxy codes corresponding to the phonetic notations for the keyword are inserted (e.g., appended or prepended to a call sign) into the conventional code to form a content-aware watermark. Preferably, the proxy codes corresponding to the phonetic representation of the keywords require less bandwidth than the keywords themselves. As described in greater detail below, after the content-aware watermarks are detected and, in some instances, conveyed to a central facility, the proxy codes corresponding to the phonetic representation of the keyword(s) are used as indices into a code book to reconstruct the phonetic representation and, subsequently, the content-descriptive information.

All of the proxy codes needed to represent a keyword may be placed in the same content-aware watermark or the proxy code may be spread across multiple content-aware watermarks. For example, if "Dylan" is represented by codes [003], [011], and [015], code [003] may be sent in a first content-aware watermark, code [011] may be sent in a second content-aware watermark, and code [015] may be sent in a third content-aware watermark. Preferably, the first, second, and third watermarks are sent sequentially.

In some examples, rather than or in addition to using phonetic encoding, some or all of the keywords to be encoded may be selected based on the current popularity of topics, persons, products, programs, and/or any other media content. The popularity of such media content is measured by, for example, measuring a frequency of occurrence throughout a defined set of media presentations (e.g., the number of times a celebrity's name was uttered during a previous month on one or more television station(s) having one or more programs dedicated to the discussion of celebrities). The selected keyword(s) are then recorded in a code book that maps each keyword to a unique proxy code. When keywords are extracted from the media content to create content-aware watermarks, the code book is referenced to obtain the corresponding proxy code (e.g., a value represented by, for example, a binary or hexadecimal word or digit) corresponding to the extracted keywords. Preferably, the code book is structured such that the proxy codes corresponding to highly popular keywords generally contain fewer bits of data than the proxy codes corresponding to less popular keywords. In some examples, where a keyword is encountered that does not have an assigned value in the popular keyword code book, the example methods, systems, apparatus, and/or articles of manufacture described herein are configured to phonetically encode the keyword, as described above. In such instances, a status indicator (e.g., a dedicated bit position) may be added to the content-aware watermark to indicate which type of encoding occurred when creating the content-aware watermark (e.g., phonetic encoding or encoding according to the popularity of selected keywords). A similar status indicator can indicate the start and/or end of a series of content-aware watermarks carrying a series of proxy codes that together correspond to one keyword (e.g., a series of phonetic codes).

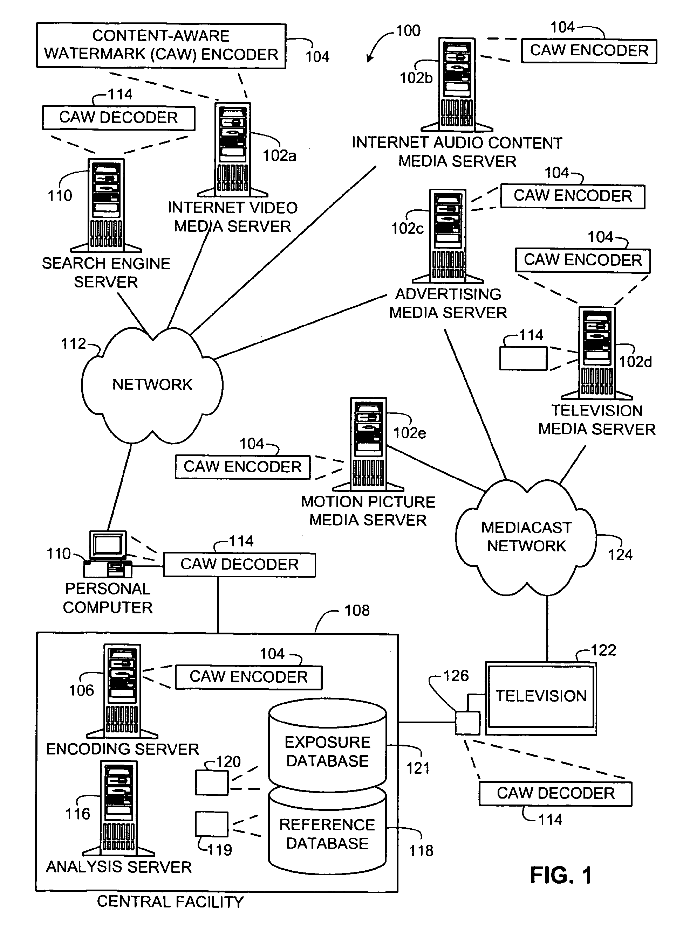

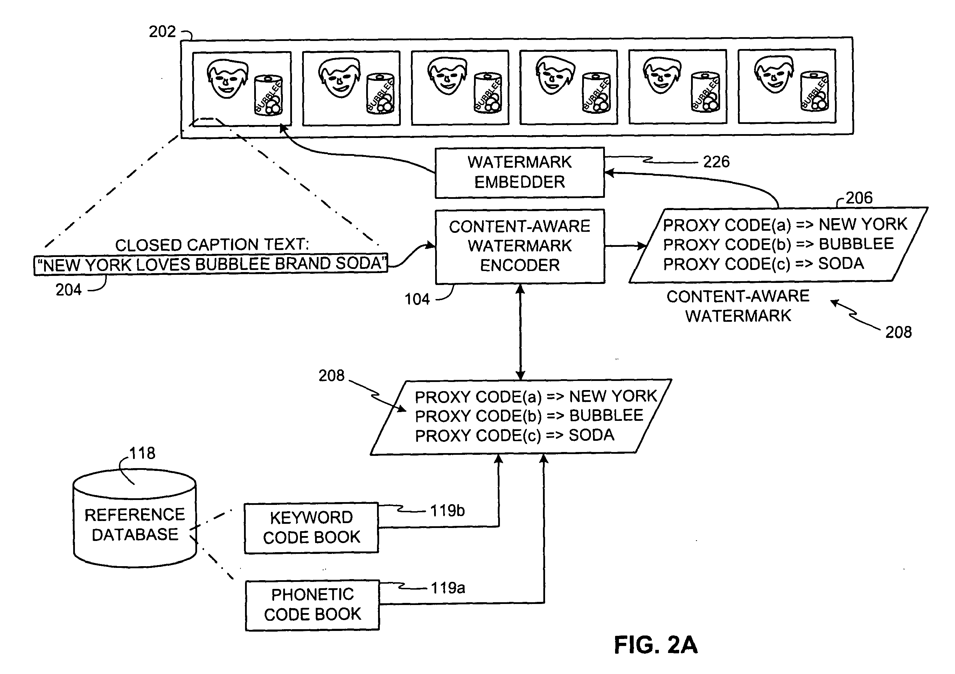

Turning to FIG. 1, an example media network system 100 used to communicate media compositions or media presentations (e.g., audio files, media files, audio streams, and/or video streams) to audience members includes a plurality of media servers 102a-e to store video/audio media for retrieval by audience members and/or for broadcasting to audience members. In the illustrated example, each of the servers 102a-e includes a respective content-aware watermark (CAW) encoder 104 to generate content-aware watermarks based on media content stored therein and to embed or otherwise associate the content-aware watermarks with respective media content. Although in the illustrated example of FIG. 1 each of the media servers 102a-e is provided with its own content-aware watermark encoder 104, in other example implementations, the content-aware watermark encoders 104 may not be installed in the media servers 102a-e and may instead be installed at central media encoding servers such as, for example, an encoding server 106 at a central facility 108. In this manner, media content to be encoded with content-aware watermarks may be communicated to the central facility 108 and the encoding server 106 can encode the media content with respective content-aware watermarks and communicate the encoded media content to the respective media servers. In other example implementations, some of the media servers 102a-e may be provided with the content-aware watermark encoders 104 while others may use the encoding server 106 at the central facility for content-aware watermarking encoding services. As described below in connection with FIGS. 2A, 2B, 3, 5A, and 5B, the content-aware watermark encoders 104 and/or 106 are configured to implement the example methods, systems, apparatus, and/or articles of manufacture described herein to construct and encode the content-aware watermarks in a manner that requires a minimal amount of bandwidth (e.g., preferably the same or substantially the same amount of bandwidth used by existing conventional codes) while maintaining the granularity of data associated with codes already present in the media content.

In the illustrated example, a personal computer 110 may be coupled via a network 112 (e.g., the Internet) to the internet video media server 102a, the internet audio content media server 102b, and/or the advertising media server 102c. The personal computer 110 may be used to decode and present media content received from any of those servers 102a-c. Additionally, the personal computer 110 includes a content-aware watermark decoder 114 to extract content-aware watermarks from presented media content, to extract the proxy codes from the content-aware watermarks, and/or to decode keywords from the proxy codes. Further, the content-aware watermark decoders 114 are configured to transmit extracted information associated with the content-aware watermarks (e.g., proxy codes) and/or the content-aware watermarks themselves to, for example, the central facility 108 for subsequent analysis. For example, an analysis server 116 in the central facility 108 can use content-descriptive information extracted from the content-aware watermarks (e.g., via the proxy codes) to determine the number of times that users of the personal computer 110 were exposed to particular media content or to advertisements for particular products or brands and/or the time and date of such exposure(s). That is, if a detected keyword corresponds to the name of a financial service, the analysis server 116 can determine the number of times that users of the personal computer 110 were exposed to the name of that financial service (whether in an advertisement or elsewhere (e.g., in a news story)) based on the number of times the personal computer 110 communicates the same financial service keyword (or the proxy code corresponding to such keywords) to the central facility 108. In some examples, the analysis server 116 compares received proxy codes to codes stored in a reference database 118 to identify the corresponding keyword(s), media identifier(s), brand name(s), product name(s), product type(s), character name(s), person(s), topic(s), etc.

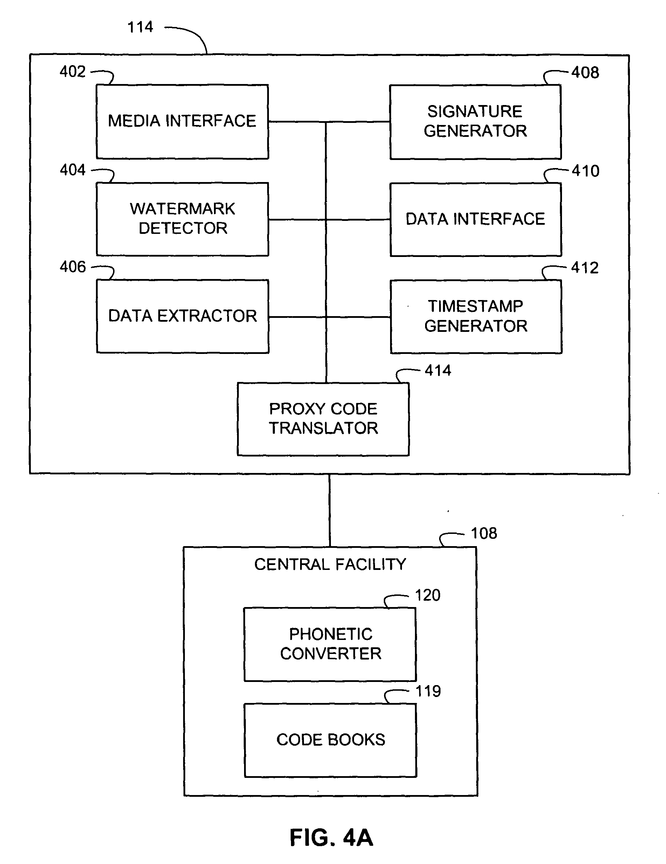

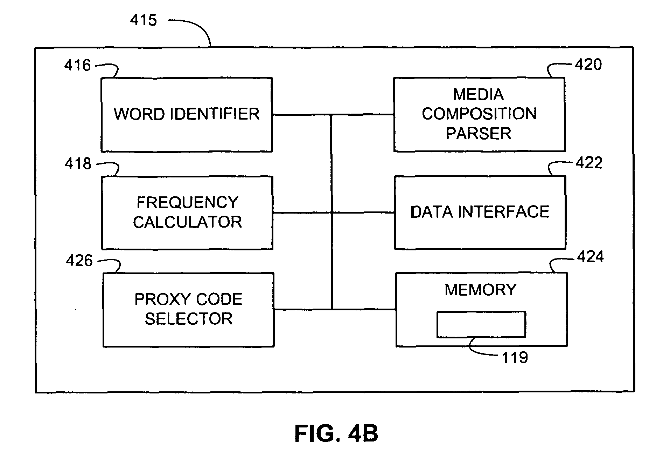

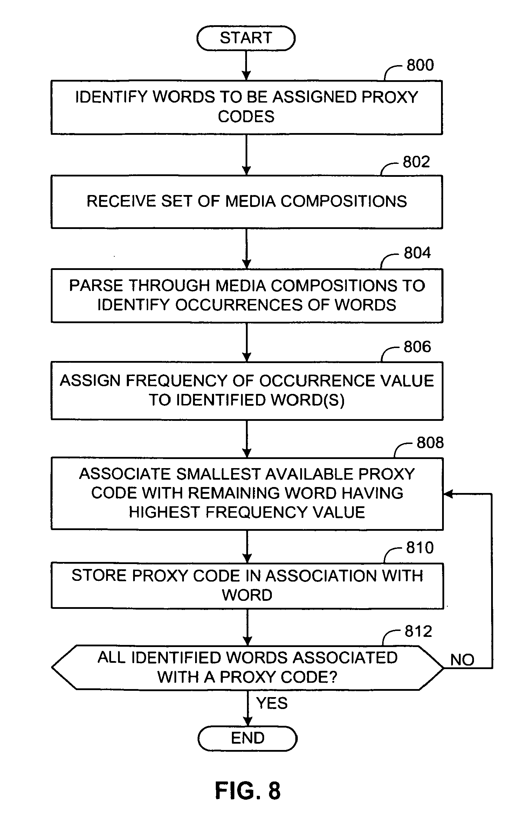

The reference database 118 stores terms of interest that are to be selected from media compositions for encoding into content-aware watermarks to be embedded in the media compositions. In other words, the terms of interest stored in the reference database 118 are the keywords that comprise the content-descriptive information of the content-aware watermarks. Additionally, the reference database 118 is configured to store one or more code books 119 (which are described below in connection with FIGS. 4A, 4B, and 8) mapping keywords and/or phonetic notations to the proxy codes to be encoded in content-aware watermarks. When the decoders 114 extract the proxy codes from content-aware watermarks and communicate the proxy codes to the central facility 108, the analysis server 116 compares the received proxy codes to entries in a code book 119 to identify the keywords and/or phonetic keywords (e.g., phonetic representations that can be reconstructed to form one or more keywords). The identified keywords can be used to determine exposures to particular media content.

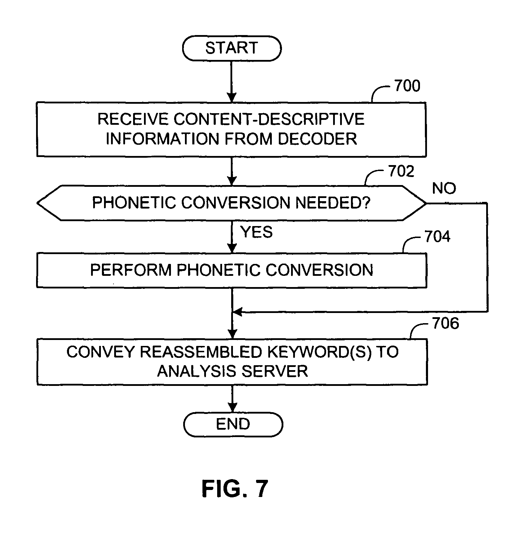

When the received proxy codes are associated with phonetic notations in a phonetic code book 119 (e.g., as a result of a previous phonetic to proxy code mapping), a phonetic converter 120 of the central facility 108 is used to reassemble keywords from the phonetic notations gathered from the code book 119. The example phonetic converter 120 of FIG. 1 is described in greater detail below in connection with FIGS. 4A and 7.

Once the keywords have been obtained (e.g., after being mapped using a code book 119 and, in some instances, reassembled using the phonetic converter 120), the analysis server 116 stores exposure levels for the keywords in an exposure database 121. Because the keywords can represent advertisements, actors, products, brands, audio and/or video media, etc., the exposure levels for the keywords can represent exposure levels for any of these as well.

In some example implementations, the personal computer 110 may be configured to execute analysis processes to perform at least some or all of the analyses described above as being performed at the central facility 108 by the analysis server 116. In such example implementations, the personal computer 110 communicates the results of its analyses to the central facility 108 for storage in the exposure database 121 and/or for further processing by the analysis server 116. In yet other example implementations, the personal computer 110 may not extract proxy codes from content-aware watermarks but may instead communicate the content-aware watermarks to the central facility 108. The analysis server 116 may then extract the keywords using the proxy codes from the content-aware watermarks for subsequent analysis.

In the illustrated example, a television 122 receives media content from the advertising media server 102c, the television media server 102d, and/or the motion picture media server 102e via a mediacast network 124. The mediacast network 124 may be an analog and/or digital broadcast network, a multicast network, and/or a unicast network. In the illustrated example, the television 122 is coupled to a media meter 126 having a content-aware watermark decoder 114 to extract content-aware watermarks from presented media content, to extract proxy codes from the content-aware watermarks, and/or to identify and decode keywords from the proxy codes. The decoder 114 of the media meter 126 is substantially similar or identical to the decoder 114 of the personal computer 110. In addition, the media meter 126 operates in substantially the same manner as the personal computer 110 with respect to extracting, decoding, and/or, processing content-aware watermarks. That is, the media meter 126 can be configured to extract proxy codes corresponding to keywords (or phonetic representations thereof) from content-aware watermarks and to communicate the proxy codes to the central facility 108. Additionally or alternatively, the media meter 126 can communicate the content-aware watermarks to the central facility 108 so that the analysis server 116 at the central facility can extract the proxy codes and identify the corresponding keywords. In some example implementations, the media meter 126 may be configured to analyze the keywords to determine media exposure and may communicate the analysis results to the central facility 108 for storage in the exposure database 121 and/or for further processing by the analysis server 116.

While an example manner of implementing the media network system 100 has been illustrated in FIG. 1, one or more of the elements, processes and/or devices illustrated in FIG. 1 may be combined, divided, re-arranged, omitted, eliminated and/or implemented in any other way. Further, the example media servers 102a-e, the example content-aware encoder 104, the example encoding server 106, the example personal computer 110, the example network 112, the example content-aware watermark decoder 114, the example analysis server 116, the example reference database 118, the example code books 119, the example phonetic converter 120, the example exposure database 121, the example mediacast network 124, the example media meter 126, and/or, more generally, the example media network system 100 of FIG. 1 may be implemented by hardware, software, firmware and/or any combination of hardware, software and/or firmware. Thus, for example, any of the example media servers 102a-e, the example content-aware encoder 104, the example encoding server 106, the example personal computer 110, the example network 112, the example content-aware watermark decoder 114, the example analysis server 116, the example reference database 118, the example code books 119, the example phonetic converter 120, the example exposure database 121, the example mediacast network 124, the example media meter 126, and/or, more generally, the example media network system 100 of FIG. 1 could be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended claims are read to cover a purely software and/or firmware implementation, at least one of the example media servers 102a-e, the example content-aware encoder 104, the example encoding server 106, the example personal computer 110, the example network 112, the example content-aware watermark decoder 114, the example analysis server 116, the example reference database 118, the example code books 119, the example phonetic converter 120, the example exposure database 121, the example mediacast network 124, the example media meter 126, and/or, more generally, the example media network system 100 of FIG. 1 are hereby expressly defined to include a tangible medium such as a memory, DVD, CD, etc. storing the software and/or firmware. Further still, the example media network system 100 of FIG. 1 may include one or more elements, processes and/or devices in addition to, or instead of, those illustrated in FIG. 1, and/or may include more than one of any or all of the illustrated elements, processes and devices.

FIG. 2A depicts an example media excerpt 202 having closed caption text 204 used by the content-aware watermark encoder 104 of FIG. 1 to generate a content-aware watermark 206. In other examples, as described below, additional or alternative methods and/or sources (other than the closed caption text 204) can be utilized to generate the content-aware watermark 206. In the illustrated example, the content-aware watermark encoder 104 receives the closed caption text 204 of the media excerpt 202 that recites "New York loves Bubblee brand soda" and selects one or more keywords indicative of the media content presented in the media excerpt 202. In the illustrated example, the content-aware watermark encoder 104 selects the terms 'New York,' 'Bubblee,' and 'soda.' The term 'New York' indicates that the advertisement corresponding to the media excerpt 202 is directed to residents of New York City, areas surrounding New York City, and/or to others that like New York City or have an affiliation with New York City. The term 'Bubblee' identifies the trade name of the product being advertised. The term 'soda' identifies the type of product being advertised.

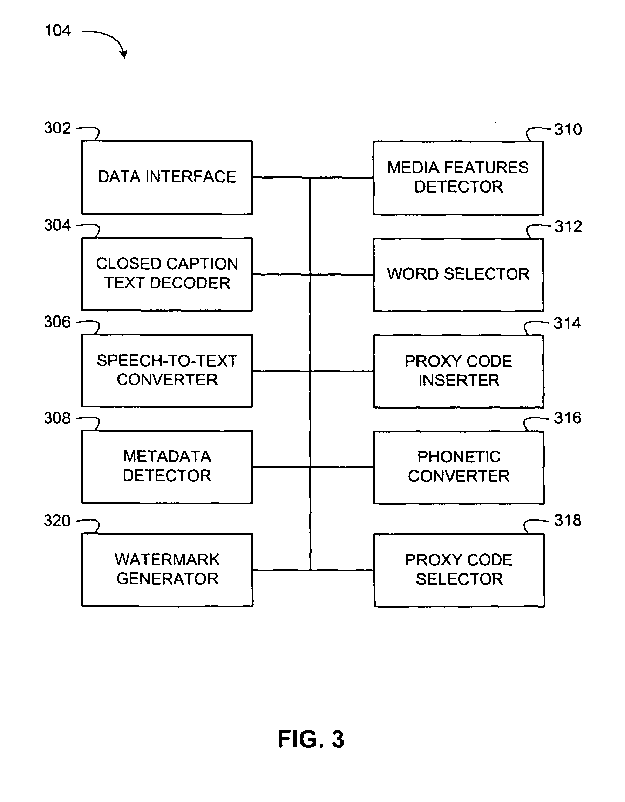

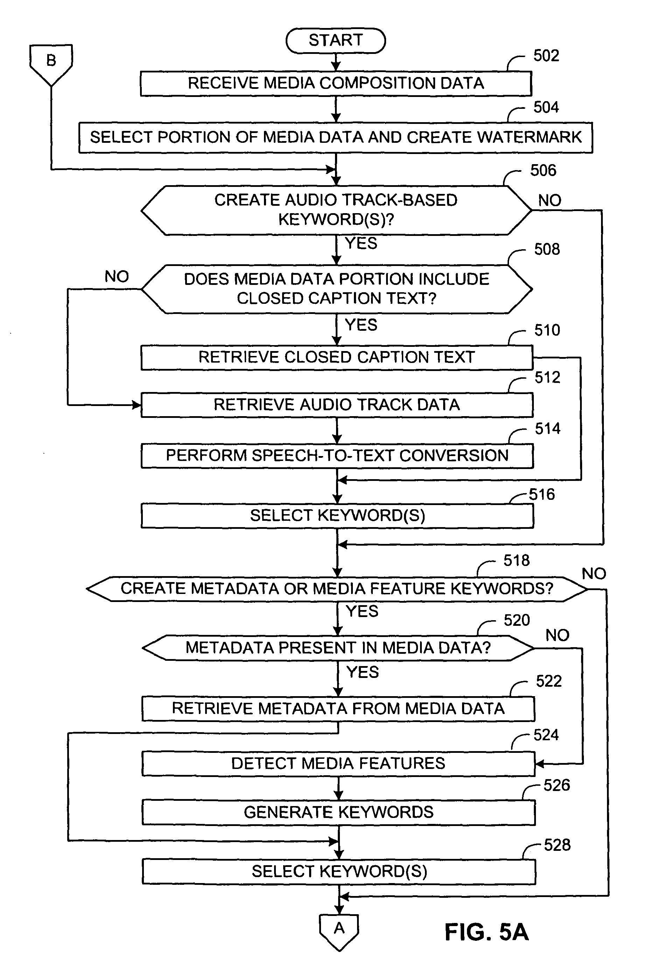

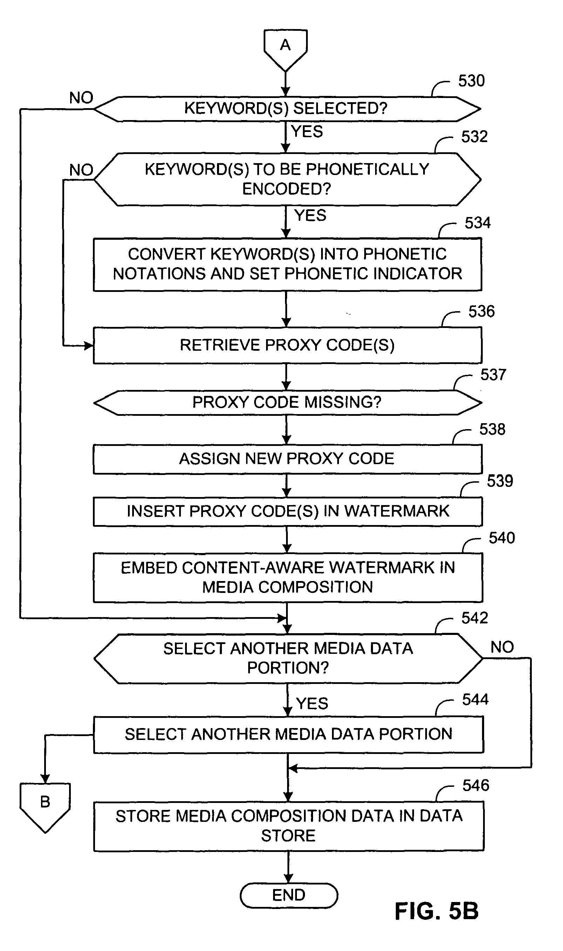

After the encoder 104 selects the term(s) or phrase(s) to be used as the content-descriptive keyword(s), the encoder 104 generates and/or obtains one of the encoding representations described herein. In the illustrated example, the encoder 104 is configured to either (1) generate phonetic notations for the keywords and to assign or retrieve the proxy codes associated therewith, and/or (2) to assign or retrieve the proxy codes directly associated with the keywords themselves (e.g., one of a plurality of keywords selected based on a popularity measurement). To retrieve the proxy codes associated with the phonetic notations, the encoder 104 references the phonetic code book 119a stored at the central facility 108. In the illustrated example, the phonetic code book 119a maps phonemes to unique proxy codes. To retrieve the proxy codes that are mapped to specific keywords, the keyword code book 119b stores proxy codes 208 in association with respective ones of the keyword terms 'New York,' 'Bubblee,' and 'soda.' The example proxy codes 208 of FIG. 2A vary in size (e.g., number bits) according to a degree of recent popularity or frequency of occurrence. An example approach of generating the proxy codes 208 of varying sizes based on the frequency of occurrence is described below in connection with FIGS. 4B and 8. The phonetic code book 119a stores proxy codes 208 in association with phonetic notations. These phonetic notations can be combined to form the approximate pronunciation (e.g., based on sounds and syllable breaks) of virtually any keyword terms (e.g., 'New York,' 'Bubblee,' and/or 'soda') The phonetic breakdown of such terms is described below in connection with FIGS. 3, 5A, and 5B. In other example implementations, the code books 119a and/or 119b are stored in data structures other than those at the central facility 108.

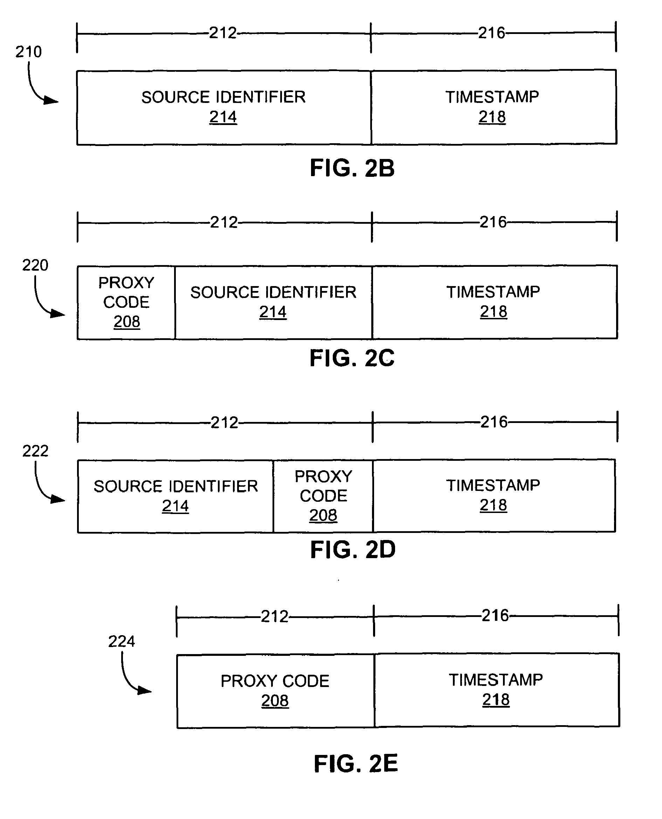

As shown in the example of FIG. 2A, the encoder 104 uses the proxy codes 208 to construct the content-aware watermark 206. FIG. 2B illustrates a prior art audience measurement code 210. The prior art watermark 210 includes a source identifier portion 212 having a source identifier 214 and a timestamp portion 216 having a timestamp 218. The source identifier 214 includes identifying information such as, for example, data corresponding to a call sign (e.g., ABC™) of a broadcasting network. The timestamp 218 includes information indicative of a time at which the encoded watermark 210 is broadcast. The prior art watermark 210 is encoded into or otherwise broadcast with broadcast content and collectible by an audience measurement meter at a downstream location (e.g., a household or business). For example, the prior art watermark 210 may be encoded into the broadcast signal every two and one-half seconds to achieve a high granularity in regards to the collected data.

As described above, the approach to transforming the conventional watermark 210 of FIG. 2A into a content-aware watermark described in U.S. Patent Application Serial No. 12/101,738 reduces the granularity of the conventional audience measurement system by inherently removing information from the conventional watermark 210. To retain this granularity, the example encoder 104 of FIG. 2A either (a) prepends or appends the proxy codes 208 to the source identifier 214 or (b) periodically replaces the source identifier 214 with the proxy codes 208. Due to the condensed size of the proxy codes 208, the proxy codes 208 are preferably appended or prepended to the source identifier 214 without an increase in size relative to prior art watermark 210 (e.g., the bandwidth required to encode the content-aware watermark 206). To achieve this, the source identifier 214 may be reduced in size (e.g., by using proxy codes to represent the station identifier).

FIG. 2C illustrates a first example content-aware watermark 220 in which the proxy code(s) 208 is prepended to the source identifier 214. Notably, the size of the source identifier portion 212 remains the same or substantially the same despite the addition of the proxy code(s) 208. If the proxy codes are small enough, more than one proxy code may be prepended with the same watermark 220. In a second example content-aware watermark 222 shown in FIG. 2D, the proxy code(s) 208 are appended to the end of the source identifier 214. Again, the size of the source identifier portion 212 remains the same or substantially the same despite the addition of the proxy codes 208. In a third example content-aware watermark 224 shown in FIG. 2E, the proxy code(s) 208 replace the source identifier 214. In the third example watermark 224, the source identifier portion 212 is smaller relative to the conventional watermark 210, or alternatively, the source identifier portion 212 may remain the same size by packing the source identifier portion 212 with multiple codes and/or with dummy data (e.g., zeros).

The watermark configuration 220, 224, or 226 to be used by the content-aware watermark encoder 104 is a design choice. If the proxy code(s) 208 are small enough and/or the source identifier 214 size can be adjusted so as to not affect the size of the source identifier portion 212, the first or second watermark configuration 220, 222 is preferred for the encoding process. Alternatively, if the proxy code(s) 208 are of a size that will affect the size of the source identifier portion 212 and/or the source identifier 214 cannot be reduced to affect the same, the third configuration 224 is preferred for the encoding process. When the third watermark configuration 224 is employed, some loss of granularity will result because the source identifier 214 is eliminated. Therefore, the third type of watermark 224 is periodically used to replace a conventional watermark 210 (e.g., one of every eight watermarks is a content-aware watermark 224) to reduce the impact on granularity of the channel change detection. In such an approach, the granularity impact may be reduced to zero or nearly zero because the conventional watermark 210 around the content-aware watermark 224 will indicate channel changes. Further, if different code books are used for different programs and/or channels, the proxy code(s) of the content-aware watermark 224 can be used to infer the channel change by referencing the code books. This approach is particularly useful in the channel surfing context where multiple channels may be tuned over a short period of time.

Referring back to FIG. 2A, a watermark embedder 226 embeds the content-aware watermark 206 (using any of the configurations 220, 222, 224) in one or more frames of the media excerpt 202 using any suitable watermark embedding technique. The watermark embedder 226 can be configured to embed the content-aware watermark 206 in a video portion of the media excerpt 202 and/or an audio portion of the media excerpt 202. In some example implementations, embedding a watermark 206 in a video domain enables using relatively larger watermarks because of the relatively larger bandwidth available for video than is typically available for audio. In some examples, the example encoding methods, apparatus, and/or articles of manufacture described herein may be used with audio encoding. In other examples, an encoder may be configured to alternate between the representative encoding (e.g., using the proxy codes described herein) and conventional encoding techniques based on the availability of bandwidth and/or what type of content-aware watermark (e.g., audio and/or video) is being employed. For example, when a significant amount of bandwidth is available, keywords may be directly encoded without the use of proxy codes. Alternating encoding techniques is disfavored in view of the attendant decoding difficulties and increased complexities.

Although the example implementation of FIG. 2A depicts the content-aware watermark encoder 104 as being configured to generate content-aware watermarks based on closed caption text, the content-aware watermark encoder 104 may additionally or alternatively be configured to generate content-aware watermarks based on other features or characteristics of media compositions. For example, the content-aware watermark encoder 104 may additionally or alternatively be configured to generate content-aware watermarks 206 based on a speech-to-text conversion performed on an audio track of a media composition. In other examples, the content-aware watermark encoder 104 may additionally or alternatively be configured to generate content-aware watermarks based on metadata (e.g., title, program name, international standard audiovisual number (ISAN), or any other identifier information), scene changes, blank frames or MPEG splice points, detected logos, etc. Example methods and apparatus to detect logos in the content of media compositions are disclosed in U.S. Provisional Application No. 60/986,723 entitled "Methods and Apparatus to Measure Brand Exposure in Media Streams," filed on November 9, 2007, which is hereby incorporated by reference herein in its entirety. Example methods and apparatus to detect blank frames are disclosed in U.S. Application Serial No. 11/534,790 entitled "Methods and Apparatus to Detect a Blank Frame in a Digital Video Broadcast Signal," filed on September 25, 2006, which is hereby incorporated by reference herein in its entirety.

FIG. 3 is a block diagram of the example content-aware watermark encoder 104 of FIGS. 1 and 2. In the illustrated example of FIG. 3, the example content-aware watermark encoder 104 includes a data interface 302, a closed caption text decoder 304, a speech-to-text converter 306, a metadata detector 308, a media features detector 310, a word selector 312, a proxy code inserter 314, a phonetic converter 316, a proxy code selector 318, and a watermark generator 320. While an example manner of implementing the content-aware watermark encoder 104 of FIG. 1 has been illustrated in FIG. 3, one or more of the elements, processes and/or devices illustrated in FIG. 3 may be combined, divided, re-arranged, omitted, eliminated and/or implemented in any other way. Further, the example data interface 302, the example closed caption text decoder 304, the example speech-to-text converter 306, the example metadata detector 308, the example media features detector 310, the example word selector 312, the example proxy code inserter 314, the example phonetic converter 316, the example proxy code selector 318, the example watermark generator 320, and/or, more generally, the example encoder 104 of FIG. 3 may be implemented by hardware, software, firmware and/or any combination of hardware, software and/or firmware. Thus, for example, any of the example data interface 302, the example closed caption text decoder 304, the example speech-to-text converter 306, the example metadata detector 308, the example media features detector 310, the example word selector 312, the example proxy code inserter 314, the example phonetic converter 316, the example proxy code selector 318, the example watermark generator 320, and/or, more generally, the example encoder 104 of FIG. 3 could be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended claims are read to cover a purely software and/or firmware implementation, at least one of the example data interface 302, the example closed caption text decoder 304, the example speech-to-text converter 306, the example metadata detector 308, the example media features detector 310, the example word selector 312, the example proxy code inserter 314, the example phonetic converter 316, the example proxy code selector 318, the example watermark generator 320, and/or, more generally, the example encoder 104 of FIG. 3 are hereby expressly defined to include a tangible medium such as a memory, DVD, CD, etc. storing the software and/or firmware. Further still, the example encoder 104 of FIG. 3 may include one or more elements, processes and/or devices in addition to, or instead of, those illustrated in FIG. 3, and/or may include more than one of any or all of the illustrated elements, processes and devices.

To transmit and receive data, the example content-aware watermark encoder 104 of FIG. 3 is provided with the data interface 302. In the illustrated example, the data interface 302 can be used to receive media composition data (e.g., audio data, video data, etc.), closed caption data, metadata, etc. from media sources (e.g., computer interfaces, cable boxes, televisions, media players, etc.), and communicate information associated with content-aware watermarks to, for example, the watermark embedder 226 (FIG. 2A) and/or the proxy code inserter 314. Further, in the illustrated example, the proxy code selector 318 accesses the appropriate one of the code books 119 (FIGS. 1 and 2A) via the data interface 302 to retrieve the proxy codes associated with selected keyword(s) and/or phonetic notation(s) and to provide the retrieved proxy codes to, for example, the proxy code inserter 314. Although not shown in FIG. 3, in some example implementations, the watermark embedder 226 may be implemented as part of the example content-aware watermark encoder 104.

To extract or decode closed caption text from media data received via the data interface 302, the example content-aware watermark encoder 104 is provided with the closed caption text decoder 304. In some example implementations, the closed caption text decoder 304 may be omitted from the example content-aware watermark encoder 104 and the content-aware watermark encoder 104 may be configured to receive decoded closed caption text from a closed caption text decoder of a media source coupled to the data interface 302.

To convert speech from media audio tracks to text, the example content-aware watermark encoder 104 is provided with the speech-to-text converter 306. In the illustrated example, the speech-to-text converter 306 is used to recognize words in media content that does not have closed caption text associated therewith or in situations where closed caption text cannot be obtained (e.g., failure or omission of the closed caption text decoder 304). In example implementations in which speech-to-text conversion capabilities are not desired, the speech-to-text converter 306 can be omitted from the example content-aware watermark encoder 104.

To detect metadata in media, the example content-aware watermark encoder 104 is provided with the metadata detector 308. The metadata detector 308 extracts metadata such as program guide information, universal resource locations (URLs), etc. from the program signal carrying the media composition.

In the illustrated example, the example content-aware watermark encoder 104 includes the media features detector 310. The media features detector 310 is configured to detect particular characteristics or features in media content (e.g., scene changes, blank frames, MPEG splice points, logos, etc.) and to generate metadata descriptive of those characteristics or features.

To select words or phrases to form keywords, the example content-aware watermark encoder 104 is provided with the word selector 312. In the illustrated example, the word selector 312 is configured to select words or phrases indicative or descriptive of respective media content in the metadata, the closed caption text, and/or audio tracks collected by the closed caption text decoder 304, the speech-to-text converter 306, the metadata detector 308 and/or the media features detector 310. To select the words or phrases, the word selector 312 may be configured to use weighted numeric factors or values assigned to pre-identified terms stored in the reference database 118 of FIG. 1. In this manner, if multiple terms in the reference database 118 are found in a portion of a media composition, the keywords used in connection with a content-aware watermark for that media composition can be limited to the terms with the highest weights. To reduce the amount of proxy codes, the reference database 118 may use the same proxy code for like terms (e.g., synonyms). To this end, the reference database 118 may include pointers correlating like terms in the database 118.

In some examples, the word selector 312 comprises a list of keywords of interest that are manually input by a system operator and/or obtained from the reference database 118. When the output of any of the closed caption text decoder 304, the speech-to-text converter 306, the metadata detector 308, and/or the media features detector 310 contains one of the keywords in the list (as detected by a comparator, coded instructions, and/or a logic circuit in the word selector 312), the word selector 312 generates an output indicating that a content-aware watermark should be generated, thereby triggering the insertion of a corresponding proxy code into a conventional watermark 210 generated by the watermark generator 320. When no match is found, the conventional watermark 210 output by the watermark generator 320 is used.

In other examples, the watermark generator 320 uses the same structure for the watermarks it outputs in every instance. For example, the watermark generator 320 may always use the format of FIG. 2C to generate all watermarks. The watermark generator 320, thus, always acts in the same manner, namely, generating a watermark having the structure of FIG. 2C with the proxy code field 208 populated with zeros, the source identifier field 214 populated with the station identifier of the station broadcasting the media composition in question, and the timestamp field 218 populated with the time and data of the broadcast. In this approach, when the word selector 312 generates an output indicating the need for a content-aware watermark, the proxy code selector 318 obtains and/or creates the required proxy code (e.g., a code for the keyword identified by the word selector 312) and the proxy code inserter 314 populates the proxy code field 208 with the corresponding proxy code(s). when the word selector 312 does not generate an output indicating a need for a content-aware watermark, the proxy code selector 318 does nothing and the watermark output by the watermark generator 320 is passed to the data interface 302 for encoding into the media composition without further modification (e.g., with the proxy code field 208 filled with all zeros or other dummy data).

To select proxy codes corresponding to keywords and/or phonetic notations for the keywords selected by the word selector 312, the example content-aware watermark encoder 104 is provided with the proxy code selector 318. In the illustrated example, the proxy code selector 318 is responsive to the word selector 312 to lookup and/or generate the proxy codes associated with the keyword(s) identified by the word selector 312. For example, the proxy code selector 318 can access an appropriate keyword code book 119b and/or a local copy thereof to retrieve one or more proxy codes corresponding to the keywords selected by the word selector 312. The proxy code inserter 314 can place the proxy code(s) in the proxy code field 208 of one or more watermarks 220, 222, 224 output by the watermark generator 320 to form a content-aware watermark 206. In other examples, the proxy code selector 318 can access a phonetic code book 119a to retrieve proxy codes corresponding to one or more phonetic notations that make up the keywords selected by the word selector 312, and the proxy code inserter 314 can insert the proxy codes into the proxy code field 208 of one or more watermarks 220, 222, 224 to form a content-aware watermark 206.

In instances where there is no proxy code corresponding to a selected keyword (e.g., when a search of the code book(s) 119 returns no code), the proxy code selector 318 (e.g., in cooperation with the code book 119 as described below in connection with FIGS. 4B and 8) assigns a new proxy code to the keyword. In some examples, the proxy code selector 318 keeps a running list of used proxy codes and selects a next available code (e.g., the next code in a numeric sequence of codes) to be assigned to the keyword. The keyword and selected proxy code are then sent to an appropriate one of the code books 119 (e.g., via the data interface 302). A similar approach is used by the proxy code selector 318 in examples where a code book is created on a program by program or channel by channel basis. In such examples, the proxy code may be universally unique (e.g., across all code books), or locally unique (e.g., within the corresponding code book).

As mentioned above, the example encoder 104 of FIG. 3 includes a proxy code inserter 314. The proxy code inserter 314 inserts the proxy code retrieved by or selected by the proxy code selector 318 into the proxy code field(s) 208 of the watermark output by the watermark generator 320 to create a content-aware watermark. If there are too many proxy codes (e.g., where multiple codes are used to identify a keyword or multiple keywords are to be encoded), the proxy code inserter 314 spreads the codes across multiple watermarks and inserts an indication to identify the start and/or stop of a series of codes. The indication(s) may be proxy code(s) that are reserved for purposes of identifying the start and stop to the decoder.

To phonetically represent the keyword(s), the example content-aware watermark encoder 104 is provided with the phonetic converter 316. The phonetic converter 316 converts words into one or more representations of the approximate pronunciation of the words. The phonetic notations are chosen from a collection or library of phonetic notations, such as the International Phonetic Alphabet (IPA), which is a system of phonetic notation devised by the International Phonetic Association and based on the Latin alphabet. The IPA can be used to represent words of any language. However, the algorithms of the phonetic converter 316 may be optimized to operate on one language or a subset of languages likely to be encountered by the phonetic converter 316 (e.g., based on a geographic location of installation and/or service).

Additionally, the phonetic converter 316 delineates points at which phonetic notations (or the proxy codes associated therewith) corresponding to one keyword end and points at which phonetic notations (or the proxy codes associated therewith) corresponding to another keyword begin. In other words, the phonetic converter 316 is capable of defining when a new term or phrase begins. The phonetic converter 316 passes the phonetic notation and the indication of the start and stop of the keywords to the proxy code selector 318. The proxy code selector 318 then looks up the proxy code(s) corresponding to the phonetic notations in a phonetic code book 119a and passes the proxy codes and the start and stop indication to the proxy code inserter 314. The proxy code inserter 314 then enters a proxy code for the start indication, a proxy code for the stop indications, and proxy code(s) for the phonetic notations into the proxy code fields of one or more watermarks as explained above. As noted above, the proxy code inserter 314 inserts a proxy codes as markers in between the proxy code representing a first keyword and the proxy code representing a second keyword to enable the decoder 114 to properly translate the keywords. In some examples, no proxy code is required.

FIG. 4A illustrates the example content-aware watermark decoder 114 of FIG. 1 shown in communication with the example central facility 108 of FIG. 1. In the illustrated example, the example content-aware watermark decoder 114 includes a media interface 402, a watermark detector 404, a data extractor 406, a signature generator 408, a data interface 410, a timestamp generator 412, and a proxy code translator 414. While an example manner of implementing the content-aware watermark decoder 114 of FIG. 1 has been illustrated in FIG. 4A, one or more of the elements, processes and/or devices illustrated in FIG. 4A may be combined, divided, re-arranged, omitted, eliminated and/or implemented in any other way. Further, the example media interface 402, the example watermark detector 404, the example data extractor 406, the example signature generator 408, the example data interface 410, the example timestamp generator 412, the example proxy code translator 414, and/or, more generally, the example decoder 114 of FIG. 4A may be implemented by hardware, software, firmware and/or any combination of hardware, software and/or firmware. Thus, for example, any of the example media interface 402, the example watermark detector 404, the example data extractor 406, the example signature generator 408, the example data interface 410, the example timestamp generator 412, the example proxy code translator 414, and/or, more generally, the example decoder 114 of FIG. 4A could be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended claims are read to cover a purely software and/or firmware implementation, at least one of the example media interface 402, the example watermark detector 404, the example data extractor 406, the example signature generator 408, the example data interface 410, the example timestamp generator 412, the example proxy code translator 414, and/or, more generally, the example decoder 114 of FIG. 4A are hereby expressly defined to include a tangible medium such as a memory, DVD, CD, etc. storing the software and/or firmware. Further still, the example decoder 114 of FIG. 4A may include one or more elements, processes and/or devices in addition to, or instead of, those illustrated in FIG. 4A, and/or may include more than one of any or all of the illustrated elements, processes and devices.

To receive audio and/or video media, the example content-aware watermark decoder 114 is provided with the media interface 402. To detect watermarks (e.g., the content-aware watermark 206 of FIG. 2A) in the media received via the media interface 402, the example content-aware watermark decoder 114 is provided with the watermark detector 404. The content-aware watermarks detected by the watermark detector 404 may be media feature based (e.g., identifying blank frames, scene changes, etc.) and/or keyword based (e.g., representing content of the media program).

To extract proxy code(s) from the detected content-aware watermarks, the example content-aware watermark decoder 114 is provided with the data extractor 406. For example, the data extractor 406 extracts the proxy codes (e.g., binary or hexadecimal words) corresponding to the keywords 'New York,' 'Bubblee,' and/or 'soda' from the content-aware watermark 206 described above in connection with FIG. 2A. Additionally or alternatively, in the illustrated example, the data extractor 406 extracts proxy codes (e.g., binary or hexadecimal words) corresponding to one or more phonetic notations that collectively represent one or more keywords. For example, with respect to the term 'soda' from the content-aware watermark 206 described above in connection with FIG. 2A, the data extractor 406 extracts a proxy code corresponding to the phonetic notation representative of the first syllable of 'soda' (e.g., 'soh') and another proxy code corresponding to the phonetic notation representative of the second syllable of 'soda' (e.g., 'duh'). As described above, the phonetic notations are chosen from a collection or library of phonetic notations, such as the International Phonetic Alphabet (IPA). The data extractor 406 also extracts proxy codes delineating the start and/or stop of a keyword, if present.

For the purpose of converting proxy codes extracted by the data extractor 406 into the keywords or phonetic notations they represent, the decoder 114 is provided with the proxy code translator 414. The proxy code translator 414 access the appropriate code book(s) 119 and uses the proxy code(s) to lookup the keywords and/or phonetic notations. The code book(s) 119 may be local (e.g., within the decoder 114) or remote (e.g., at the central facility 108 as shown in FIG. 4A). Although the proxy code translator 414 is shown as present in the decoder 114, it could alternatively be located at the central facility 108. When the proxy code translator 414 is located at the decoder 114, it is preferred to maintain local copies of the code book(s) 119 at the decoder 114.

To transmit and receive data, the example content-aware watermark decoder 114 is provided with the data interface 410. In the illustrated example, the data interface 410 can be used to store the keyword(s), proxy code(s), and/or signature(s) (e.g., as generated by the signature generator 408 discussed below) in a memory and/or to communicate the same to the central facility 108. Further, the example data interface 410 of FIG. 4A has access to the code book(s) 119 (FIGS. 1 and 2) at the central facility 108 to obtain keyword(s) and/or phonetic notations associated with extracted proxy codes.

In the illustrated example, for the purpose of reconstructing keywords from phonetic notations, the central facility 108 is provided with the phonetic converter 120. In alternative examples, the phonetic converter 120 is located at the decoder 114. Irrespective of its location, the phonetic converter 120 converts the phonetic notations retrieved via the proxy code lookup performed by the proxy code translator 414 into the corresponding keyword(s). The resulting keyword(s) constitute the content-descriptive information that was encoded into the content-aware watermark by the content-aware watermark encoder 104 (FIGS. 1-3) and are, thus, stored for further processing.

As described above, the example central facility 108 of FIG. 1 includes a plurality of code books 119. In some examples, each television program is assigned an individual code book containing proxy codes associated with, for example, characters names in a code book assigned to a sitcom, celebrity names in a code book assigned to an entertainment program, or current event titles in a code book assigned to a news program or talk show. In such instances, the source identifiers (e.g., the source identifier 214 of FIG. 2B) and timestamps (e.g., the timestamp 218 of FIG. 2B) can be used to identify which code book should be referenced when correlating the proxy codes with the keyword(s) stored therein. For example, when a source identifier 214 corresponding to "News Show XYZ" is received, the decoder 104 assigned the task of correlating the proxy codes with the corresponding keywords knows to access the code book assigned to "News Show XYZ" based on the source identifier.

In examples employing the watermark structure 224 of FIG. 2E, no source identifier 214 is present in the content-aware watermark 224. In such examples, the content-aware watermarks 224 are interleaved with conventional watermarks 210 (see FIG. 2B) and, thus, the source identifier 214 from the conventional watermarks 210 surrounding the content-aware watermarks 224 may be used by the decoder 114 to identify the correct one of the code books 119. In the event that the source identifier 214 from a conventional watermark 210 proceeding a content-aware watermark 224 does not match the source identifier 214 from the conventional watermark 210 following the content-aware watermark 224, a channel change event has occurred and it may not be possible to credit the content represented by the content-aware watermark 224 unless the code book associated with the first source identifier and the code book associated with the second source identifier do not both use the proxy code. If only one of the two code books include the cod, the content can be credited since it is implicitly known which station was tuned.

In some examples, rather than assigning a specific code book to each program, a specific code book is assigned to each station. The above examples explaining the use of the code books in the program based code book context apply with equal force to the code books assigned to station context.

In the illustrated example, the content-aware watermark decoder 114 is also provided with a signature generator 408 to generate signatures of audio and/or video portions of the media received via the media interface 402. In some example implementations, the signatures can be compared to reference signatures stored in, for example, the reference database 118 of FIG. 1 in association with media composition identification information to identify the media compositions presented to audience members.

Further, in the illustrated example, the timestamp generator 412 is configured to generate timestamps indicating the date and/or time(s) at which (1) the proxy code(s) are recovered from a media composition by the content-aware watermark decoder 114 and/or (2) signature(s) are generated by the signature generator 412. The timestamps may be representative of a time of day to indicate when an audience member was exposed to media content represented by the proxy code(s) or the signatures. Alternatively or additionally, the timestamps may be representative of a track time or elapsed media presentation time of the media composition to indicate the temporal location in the media composition from where the watermark(s) containing the proxy code(s) associated with the keyword(s) were extracted or the signature(s) were generated.

FIG. 4B is a block diagram of an example apparatus 415 that may be used to generate the example code book (s) 119 of FIGS. 1 and 4A. In particular, the example apparatus 415 is a code book generator 415 which is configured to associate proxy codes with keywords and/or portions of keywords occurring in media compositions. varying in size according to a frequency of occurrence in a set of media compositions. The set of media compositions may correspond to a group of programs broadcast on a certain set of channels over a certain period of time (e.g., the previous two weeks or one month). The determination of which channels and/or what periods of time are to constitute the set of media compositions is a design choice to be made by, for example, a media exposure measurement entity. In the illustrated example, keywords (and/or portions thereof) occurring more frequently in the set of media compositions are assigned smaller proxy codes such that the most commonly used proxy codes take up a reduced amount of bandwidth compared to the larger proxy codes assigned to less frequently occurring keywords (and/or portions thereof).

To determine which keywords (and/or portions thereof) are to be assigned proxy codes, the example code book generator 415 of FIG. 4B includes a word identifier 416. In the illustrated example, the word identifier 416 accesses the reference database 118 to obtain a list of keywords of interest as entered by, for example, a system operator. In other examples, the word identifier 416 may access any other suitable source to determine which words are likely to be selected as content-descriptive information (e.g., by the word selector 312 of the encoder 104).

To determine how often the keywords identified by the word identifier 416 occur in the set of media compositions, the example code book generator 415 of FIG. 4B includes a frequency calculator 418 and a media composition parser 420. In the illustrated example, the code book generator 415 receives the set of media compositions via a data interface 422 and stores a temporary copy of the same in a memory 424. The media composition parser 420 searches the media compositions for instances of the words identified by the word identifier 416. For example, the media composition parser 420 of FIG. 4B performs a comparison of the words identified by the word identifier 416 and a closed caption text conveyed to the code book generator 415 in association with the set of media compositions.

The number of instances of each word of interest is conveyed to the frequency calculator 418. In the illustrated example, the frequency calculator 418 assigns a frequency of occurrence to each word based on the corresponding number of occurrences and the number of media content compositions contained in the set of media compositions. In particular, the example frequency calculator 418 computes a frequency percentage in accordance with the following equation:

$$frequency = \frac{\# \, of \, occurences}{\# \, of \, programs}, \quad \text{Equation 1.}$$

The example frequency calculator 418 of FIG. 4B groups the frequency values into ranges and assigns values to each range of frequency percentage. For example, a first word with a frequency percentage of one percent may be assigned the same frequency value by the frequency calculator as a second word with a frequency percentage of two percent. In other examples, the frequency calculator 418 may simply use the frequency percentage as the frequency value.

The frequency value assigned to each word by the frequency calculator 418 is conveyed to a proxy code selector 426. The proxy code selector 426 includes and/or has access to a set of proxy codes (e.g., a numeric sequence of codes) that are available to be assigned to the keywords. In the illustrated example, the set of available proxy codes includes proxy codes of varying sizes. As described above, inserting one or more proxy codes into a conventional watermark (e.g., for the purpose of transforming the conventional watermark into a content-aware watermark) may impact the granularity of the associated information (e.g., station identification information). Accordingly, the example code book generator 415 of FIG. 4B assigns the smaller of the available proxy codes to the most frequently occurring words. Specifically, the proxy code selector 426 determines which of the words identified by the word identifier 416 were assigned the highest frequency value and/or fall within the highest frequency value range. These words are then associated with the smallest available proxy codes by the proxy code selector 426. The proxy selector then determines which of the words identified by the word identifier 416 were assigned the next highest frequency value and/or fall within the next highest frequency value range. These words are then associated with the next smallest available proxy codes by the proxy code selector 426. In the illustrated example, this process continues until each word identified by the word identifier 416 is associated with a proxy code. The words identified by the word identifier 416, along with the associated proxy codes, are then stored in the memory 424 as a code book 119.

In an alternative implementation, the example code book generator 415 may assign proxy codes to a plurality of keywords using a different approach. In particular, the code book generator 415 may initially use the media composition parser 420 to parse through a set of media compositions and to calculate a number of occurrences for the words present in the media compositions. For example, the media composition parser 420 may receive the set of media compositions from the data interface 422 and determine that a first word occurs one thousand times, that a second word occurs eight hundred times, that a third word occurs seven hundred times, etc. In such instances, the word identifier 416 then identifies the keywords to be assigned proxy codes based on the calculations made by the media composition parser 420. For example, the word identifier 416 may identify the most frequently occurring three hundred nouns found in the media compositions as the keywords to be assigned proxy codes.

Similar to the example described above, the number of occurrences of each word identified by the word identifier 416 is conveyed to the frequency calculator 418. Further, the frequency calculator 418 assigns a frequency of occurrence to each word based on the corresponding number of occurrences and the number of media content compositions contained in the set of media compositions (e.g., using equation 1 listed above). The frequency value assigned to each word by the frequency calculator 418 is conveyed to a proxy code selector 426, which associates a proxy code with the identified keywords as described above. The words identified by the word identifier 416, along with the associated proxy codes, are then stored in the memory 424 as a code book 119.

While an example manner of implementing the code book generator 415 has been illustrated in FIG. 4B, one or more of the elements, processes and/or devices illustrated in FIG. 4B may be combined, divided, re-arranged, omitted, eliminated and/or implemented in any other way. Further, the example word identifier 416, the example frequency calculator 418, the example media composition parser 420, the example data interface 422, the example memory 424, the example proxy code selector 426, and/or, more generally, the example code book generator 415 of FIG. 4B may be implemented by hardware, software, firmware and/or any combination of hardware, software and/or firmware. Thus, for example, any of the example word identifier 416, the example frequency calculator 418, the example media composition parser 420, the example data interface 422, the example memory 424, the example proxy code selector 426, and/or, more generally, the example code book generator 415 of FIG. 4B could be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended claims are read to cover a purely software and/or firmware implementation, at least one of the example word identifier, the example frequency calculator, the example media composition parser, the example data interface, the example memory, the example proxy code selector, and/or, more generally, the example code book generator are hereby expressly defined to include a tangible medium such as a memory, DVD, CD, etc. storing the software and/or firmware. Further still, the example code book generator 415 of FIG. 4B may include one or more elements, processes and/or devices in addition to, or instead of, those illustrated in FIG. 4B, and/or may include more than one of any or all of the illustrated elements, processes and devices.

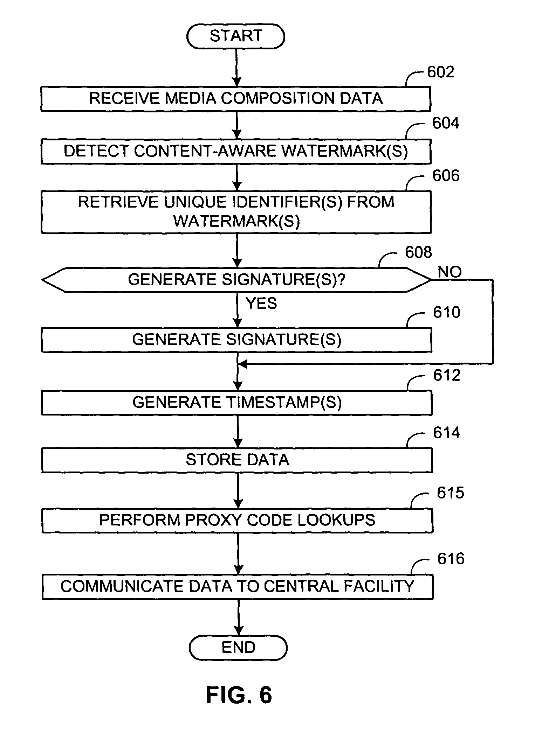

The flow diagrams depicted in FIGS. 5A, 5B, and 6-8 are representative of machine readable instructions that can be executed to implement the example systems, methods, apparatus, and/or articles of manufacture described herein. In particular, FIGS. 5A and 5B depict a flow diagram representative of machine readable instructions that may be executed to implement the example content-aware watermark encoder 104 of FIGS. 1-3 to construct content-aware watermarks and embed the content-aware watermarks into media. FIG. 6 is a flow diagram representative of machine readable instructions that may be executed to implement the example content-aware watermark decoder 114 of FIGS. 1 and 4A to detect, decode, and transmit information associated with content-aware watermarks. FIG. 7 is a flow diagram representative of example machine readable instructions that may be executed to implement the example central facility 108 of FIGS. 1 and 4A to process information received from the example decoder of FIGS. 1 and 4A. FIG. 8 is a flow diagram representative of example machine readable instructions that may be executed to implement the example code book(s) 119 of FIGS. 1, 4A, and/or 4B to select one or more proxy codes for one or more keywords.

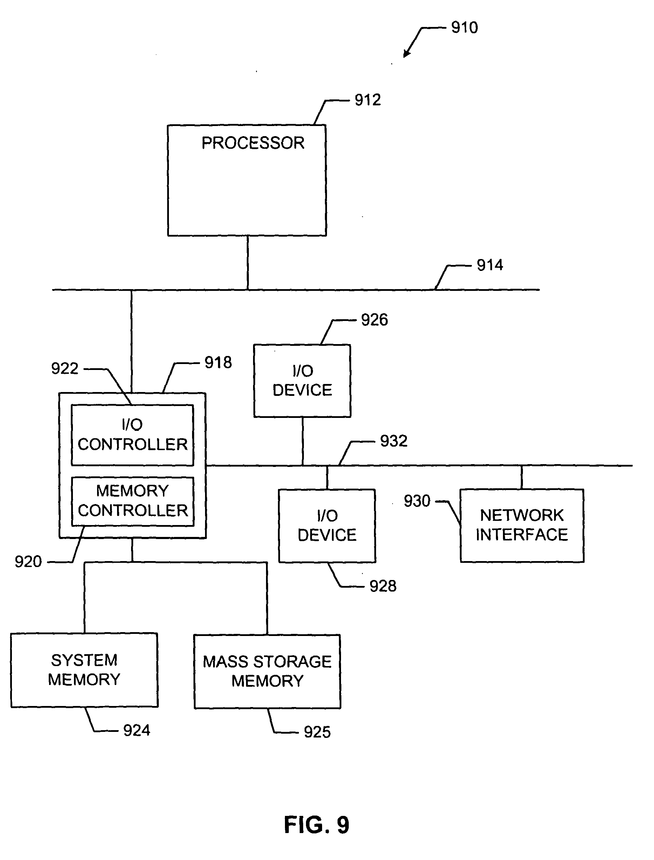

The example processes of FIGS. 5A, 5B, and 6-8 may be performed using a processor, a controller and/or any other suitable processing device. For example, the example processes of FIGS. 5A, 5B, and 6-8 may be implemented in coded instructions stored on a tangible medium such as a flash memory, a read-only memory (ROM) and/or random-access memory (RAM) associated with a processor (e.g., the example processor 912 discussed below in connection with FIG. 9). Alternatively, some or all of the example processes of FIGS. 5A, 5B, and 6-8 may be implemented using any combination(s) of application specific integrated circuit(s) (ASIC(s)), programmable logic device(s) (PLD(s)), field programmable logic device(s) (FPLD(s)), discrete logic, hardware, firmware, etc. Also, some or all of the example processes of FIGS. 5A, 5B, and 6-8 may be implemented manually or as any combination(s) of any of the foregoing techniques, for example, any combination of firmware, software, discrete logic and/or hardware. Further, although the example processes of FIGS. 5A, 5B, and 6-8 are described with reference to the flow diagrams of FIGS. 5A, 5B, and 6-8, other methods of implementing the processes of FIGS. 5A, 5B, and 6-8 may be employed. For example, the order of execution of the blocks may be changed, and/or some of the blocks described may be changed, eliminated, sub-divided, or combined. Additionally, any or all of the example processes of FIGS. 5A, 5B, and 6-8 may be performed sequentially and/or in parallel by, for example, separate processing threads, processors, devices, discrete logic, circuits, etc.

Turning to FIG. 5A, initially the data interface 302 (FIG. 3) receives media composition data (block 502) from, for example, a media source. The word selector 312 then selects a portion of the media data to process for generating a content-aware watermark and the watermark generator 320 generates a watermark using one of the watermark configurations 220, 222, 224 of FIG. 2C, 2D, or 2E (block 504). The watermark generator 320 populates the source identifier field 214 and the timestamp field 218 with appropriate data and fills the proxy code field 208 with dummy data (block 504). The content-aware watermark encoder 104 (FIGS. 1 and 2A) then determines whether it should create audio track-based keyword(s) (block 506). For example, if a user and/or administrator sets a configuration option of the content-aware watermark encoder 104 to not generate audio track-based keyword(s), if an audio track and/or closed caption text is not present, or if a user sets a configuration option to only generate metadata-based keyword(s), the content-aware watermark encoder 104 will determine that it should not create audio track-based keywords (block 506) and control will advance to block 518.

If the example content-aware watermark encoder 104 determines that it should create audio track-based keyword(s) (block 506), the media features detector 310 (FIG. 3) determines whether the media data portion includes closed caption text (block 508). If the media data portion includes closed caption text (block 508), the closed caption text decoder 304 (FIG. 3) retrieves the closed caption text (block 510) from the media data such as, for example, the closed caption text 204 of FIG. 2A.

If the media data portion does not include closed caption text (block 508), the speech-to-text converter 306 (FIG. 3) retrieves the audio track portion from the media data portion (block 512). The speech-to-text converter 306 then performs a speech-to-text conversion (block 514) on the audio track portion to generate a textual representation of the audio track portion. After performing the speech-to-text conversion (block 514) or after retrieving the closed caption text (block 510), the word selector 312 (FIG. 3) selects one or more keyword(s) (block 516) from the closed caption text retrieved at block 510 and/or the text generated at block 514. For example, to select the keyword(s), the word selector 312 may select words or phrases in the closed caption text or audio track portion indicative or descriptive of content in the media data portion and/or mentioned or presented in the media data portion, such as capitalized words in the closed caption text. Additionally or alternatively, the word selector 312 may be configured to select words or phrases that might be of interest to a user searching for media content in, for example, servers coupled to the Internet (e.g., the media servers 102a-c coupled to the internetwork 112 of FIG. 1). The keywords may be selected by, for example, comparing words detected in the closed caption text or audio track portion to words of interest identified in a list in, for example, the reference database 118 (FIG. 1) (e.g., 'New York' may be pre-identified as a term of interest to be selected when found). The pre-selected keywords in the reference database 118 may be weighted with a numeric factor so if multiple terms in the reference database 118 are found in a portion of a media composition, the keywords encoded into content-aware watermarks can be limited to the terms with the highest weights.

After the word selector 312 selects the keyword(s) at block 516, or if the content-aware watermark encoder 104 determined that it should not create audio track-based keywords (block 506), the example content-aware watermark encoder 104 then determines whether it should create metadata-based keyword(s) (block 518). For example, if a user sets a configuration option of the content-aware watermark encoder 104 to not generate metadata-based keyword(s) or if a user and/or administrator sets a configuration option to only generate audio track-based keyword(s), the content-aware watermark encoder 104 will determine that it should not create metadata-based keywords (block 518) and control will advance to block 530 (FIG. 5B).

If the example content-aware watermark encoder 104 determines that it should create metadata-based keyword(s) (block 518) (e.g., the content-aware watermark encoder is configured to create metadata-based keyword(s)), the metadata detector 308 (FIG. 3) determines whether metadata is present in the media data portion (block 520). If metadata is present, the metadata detector 308 retrieves the metadata from the media data portion (block 522).

If metadata is not present in the media data portion (block 520), the media features detector 310 (FIG. 3), detects media features (or characteristics) in the media data portion (block 524). For example, the media features detector 310 may detect media features specified in, for example, configuration settings of the content-aware watermark encoder 104. If the configuration settings specify that content-aware watermarks should include keywords indicative of blank frames, the media features detector 310 detects blank frames in the media portion at block 524. The media features detector 310 then generates keywords based on the features (or characteristics) detected at block 524.

After the media features detector 310 generates keywords based on the detected features (or characteristics) (block 524) or after the metadata detector 308 retrieves the metadata from the media data portion (block 522), the word selector 312 (FIG. 3) selects (or creates) one or more of the keyword(s) for inclusion (block 528). For example, a keyword for a blank frame may be written as a keyword 'BF012032' indicating a blank frame at timestamp 1:20:32. A content aware watermark could be embedded in the corresponding blank frame or in a frame preceding or following the blank frame. As with the keywords for the audio portion of the content, keywords indicative of metadata or media features may be selected by referencing the reference database 118 storing preselected, weighted terms of contents.

After the keyword(s) are selected (or created) (block 528) or if the content-aware watermark encoder 104 determines that it should not create keywords based on metadata or media features (block 518), the content-aware watermark encoder 104 determines whether keyword(s) have been selected (or created) (block 530) (FIG. 5B). For example, if the content-aware watermark encoder 104 determined that it should not create audio track-based keyword(s) (block 506) and determined that it should not create metadata or media feature based keyword(s) (block 518), the content-aware watermark encoder 104 determines that no keyword(s) have been selected (or created) (block 530) and control advances to block 542.

Otherwise, if keyword(s) have been selected (or created) (block 530), the content-aware watermark encoder 104 determines whether the keyword(s) are to be phonetically encoded (block 532). For example, the content-aware watermark encoder 104 may be configured to break down or convert the keyword(s) into phonetic notations representative of their approximate pronunciation. In the illustrated example, to determine whether to phonetically encode the keyword (s), the content-aware watermark encoder 104 checks an internal setting that determines a mode of operation. In some instances, one or more administrators of the media network system 100 and/or any of the components thereof (e.g., the content-aware watermark encoders 104) are charged with setting and/or changing the internal setting based on, for example, desired performance characteristics, current capabilities, and/or the size of the selected keyword(s) and/or the associated proxy codes.

In other examples, the content-aware watermark encoder 104 may first attempt to retrieve a proxy code associated with the keyword(s) from the code book 119 via the data interface 302 and, after finding that no such proxy code is stored in the code book 119, determine that the keyword(s) are to be phonetically encoded. In other words, instructions to phonetically encode the keyword(s) may result from either (1) a lack of a proxy code associated selected keyword(s) or (2) the internal setting described above. Such a configuration may account for instances in which the word selector 312 inaccurately chose the keyword(s) (e.g., based on a set of desirable keywords stored in the reference database 118) or when the word selector 312 chose a keyword not yet encountered or indexed in the set of proxy codes.

If the content-aware watermark encoder 104 determines that keyword(s) are to be phonetically encoded (block 532), the phonetic converter 316 (FIG. 3) converts the keyword(s) into one or representations of the approximate pronunciation of the keyword(s) (block 534) and sets an indicator (e.g., a status bit) associated with the resulting representations of the of the keyword(s) to indicate that the phonetic conversion has occurred. As described above in connection with FIG. 3, to perform such a conversion, the example phonetic converter 316 of FIG. 3 employs one or more algorithms to divide words into one or more phonetic notations.

After the phonetic notations are generated (block 534) or when the keyword(s) are not to be phonetically encoded (block 532), the proxy code selector 318 (FIG. 3) accesses the appropriate code book 119 (FIG. 2A) to retrieve proxy codes (block 536) corresponding to the keyword(s) and/or the phonetic notations representative of the keyword (s) selected at block 516 and/or block 528 of FIG. 5A. The indicator set (or not set) at block 534 is referenced by the proxy code detector 318 to determine whether a phonetic conversion has occurred and, thus, the code book 119 mapping proxy codes to phonetic notations must be accessed, or whether proxy code(s) directly associated with the keyword(s) are to be retrieved. In the illustrated example, the size of the retrieved proxy codes depends on a frequency at which the proxy codes are chosen. That is, more popular keywords are assigned smaller proxy codes. Similarly, when building the phonetic code book 119a, smaller proxy codes are preferably assigned to the most commonly used phonetic notations.

After the proxy code(s) are returned (or should have been returned) from the code book (block 536), the proxy code selector 318 determines whether all required proxy codes have been returned (block 537). If not all required codes are returned (e.g., there is no proxy code in the code book(s) for a given keyword) (block 537), the proxy code selector 318 assigns a new proxy code to the keyword and writes the new keyword-proxy code pair in the appropriate code book (block 538).

After the proxy code(s) are retrieved (block 536), the proxy code inserter 314 (FIG. 3) inserts the proxy code (s) in the proxy code field 208 of the watermark created at block 504 to create a content-aware watermark (e.g., the content aware watermark 206 of FIG. 2A) (block 539). As described above in connection with FIG. 2C-2E, the proxy code(s) are inserted into a proxy code field 208 that is prepended or appended to the source identifier field 214 or in place of the source identifier 214. The watermark embedder 226 (FIG. 2A) then embeds or otherwise associates the content-aware watermark with the media composition (block 540). For example, the watermark embedder 226 can embed the content-aware watermark in the media data portion selected at block 504 and/or in any portion of the media signal.

After the watermark embedder 226 embeds the content-aware watermark in the media composition (block 540) or if keyword(s) have not been selected (or created) (block 530), the content-aware watermark encoder 104 determines whether it should select another media data portion (block 542) for which to generate a content-aware watermark. In the illustrated example, if the content-aware watermark encoder 104 has not processed all of the media composition received at block 502, the word selector 312 (FIG. 3) selects another media data portion (block 544) and control returns to block 506 of FIG. 5A for further processing as explained above. Otherwise, if the content-aware watermark encoder 104 determines that it should not select another media data portion (e.g., the content-aware watermark encoder 104 has processed all of the media composition received at block 502 or a configuration setting of the content-aware watermark encoder 104 specifies to only generate content-aware watermarks for a particular portion of media compositions (e.g., the starting portion or the ending portion)) (block 542), the data interface 302 passes the media composition data including the content-aware watermark to a transmitter for broadcast or stores the media composition in a data store (e.g., one of the media servers 102a-e of FIG. 1) for later broadcast (block 546). The example process of FIGS. 5A and 5B then terminates.

FIG. 6 illustrates example instructions that may be executed to implement the decoder 114 to detect, decode, and transmit information associated with content-aware watermarks. Initially, the media interface 402 (FIG. 4A) of the content-aware watermark decoder 114 receives a media composition (block 602) having one or more embedded content-aware watermarks. For example, the media interface 402 can receive a media composition from the personal computer 110 or the television 122 of FIG. 1. The watermark detector 404 (FIG. 4A) detects one or more content-aware watermark (s) (block 604) from the media composition data. The data extractor 406 (FIG. 4A) retrieves one or more proxy code(s) from the content-aware watermark(s) (block 606).

Then, the content-aware watermark decoder 114 determines whether it should generate any signatures (block 608). For example, the content-aware watermark decoder 114 may have configuration settings specifying that it should generate signatures when a code cannot be read. If the content-aware watermark decoder 114 determines that it should generate one or more signature(s) (block 608), the signature generator 408 (FIG. 4A) generates the signature(s) (block 610).

After the signature generator 408 generates the signature(s) (block 610) or if the example content-aware watermark decoder 114 determines that it should not generate any signatures (block 608), the timestamp generator 412 (FIG. 4A) of the content-aware decoder 114 generates one or more timestamp(s) (block 612) indicating the date and/or time at which the proxy code(s) were extracted and/or the signature(s) were generated. Typically, the timestamping is done at the monitored media site.

The proxy code(s), timestamp(s), and/or signature(s) are stored in a memory (block 614) such as, for example, the memory 924 or the memory 925 of FIG. 9. In systems that employ a people meter or other mechanism for identifying the audience member, the identity and/or demographic characteristics of the audience member(s) that were exposed to the media content represented by the keyword(s) are also stored. Typically, the demographic data collection is done at the monitored media site.

The proxy code translator 414 then translates any proxy codes extracted by the data extractor 404 into keyword (s) and/or phonetic notations (block 615). The proxy code translator 414 performs this translation by looking up the proxy code(s) in the corresponding code book(s).

The content-aware watermark decoder 114 then communicates the content-descriptive information (e.g., proxy code(s) and/or keyword(s) and/or phonetic notations), timestamp(s), and/or signature(s), or any other information related to the content-aware watermark(s), to the central facility 108 (block 616). For example, the data interface 410 can send information to a communication interface (not shown) communicatively coupled to the central facility 108 via, for example, a network connection (e.g., the Internet), a telephone connection, etc. The example process of FIG. 6 then terminates.

FIG. 7 illustrates example instructions that may be executed to implement the central facility 108 to process information received from the decoder 114 associated with content-aware watermarks. Initially, the central facility 108 receives the content-descriptive information from the decoder 114 (as communicated at block 616 of FIG. 6) (block 700). The central facility 108 then determines whether a phonetic conversion is needed (block 702) by, for example, checking the indicator described above in connection with block 534 of FIG. 5B. In the illustrated example, the indicator is transferred from the decoder 114 with the content-descriptive data and indicates whether a phonetic conversion has occurred (e.g., during an encoding of the keywords into a content-aware watermark). If a phonetic conversion is needed, the phonetic converter 120 references the phonetic code book 119a to obtain the phonetic notations corresponding to the received proxy codes. The phonetic converter 120 then uses the phonetic notations to reassemble one or more keywords (block 704). The keywords, which describe the content of the audio/video programming exposed to the corresponding audience, is then conveyed to the example analysis server 116 of FIG. 1, which can use such information to develop ratings and/or perform other analyses (block 706). The example process of FIG. 7 then terminates.

FIG. 8 is a flow diagram representative of example machine readable instructions that may be executed to implement the example code book generator 415 of FIG. 4B to associate one or more proxy codes with one or more keywords. As described herein, the example code book generator 415 of FIG. 4B is configured to associate proxy codes with keywords to form a code book 119. In the illustrated example, keywords occurring more frequently in a certain group of media compositions (e.g., broadcast on one or more broadcast channels) over in certain period of time (e.g., as determined by a media exposure measurement entity) are assigned smaller proxy codes such that the most commonly used proxy codes take up a reduced amount of bandwidth compared to the larger proxy codes assigned to less frequently occurring keywords.

Initially, the example word identifier 416 (FIG. 4B) determines which words are to be assigned proxy codes (block 800). In the illustrated example, the word identifier 416 accesses the reference database 118 to obtain a list of keywords of interest as entered by, for example, a system operator. In other examples, the word identifier 416 may access any other suitable source to determine which words are to be selected as content-descriptive information. The code book generator 415 then receives, via the example data interface 422 (FIG. 4B), the set of media compositions for which the frequency of occurrence of the identified words is to be measured (block 802).

The example media composition parser 420 (FIG. 4B) searches the media compositions for instances of the words identified by the word identifier 416 and maintains a tally of the number of identified instances of each word (block 804). In the illustrated example, parsing through the set of media compositions includes performing a comparison of the words identified by the word identifier 416 and a closed caption text conveyed to the code book 119 in association with the set of media compositions. In other examples, the content of the media compositions may be alternatively identified and compared to the words identified by the word identifier 416.

The number of instances of each word of interest is conveyed to the example frequency calculator 418 (FIG. 4B). In the illustrated example, the frequency calculator 418 assigns a frequency of occurrence to each word based on the corresponding number of occurrences and the amount of media content contained in the set of media compositions (block 806). In particular, the example frequency calculator 418 assigns values to each word according to a range of frequencies. For example, a first word occurring one percent of the time covered by the set of media compositions may be assigned the same frequency value by the frequency calculator as a second word occurring two percent of the time covered by the set of media compositions. In other examples, the frequency calculator 418 may assign a frequency value to each occurring word without regard to any frequency range.

The frequency value assigned to each word by the frequency calculator 418 is conveyed to a proxy code selector 426 (FIG. 4B), which includes and/or has access to a set of proxy codes of varying sizes that are available to be assigned to the words identified at block 800. The proxy code selector 426 determines which of the remaining (e.g., not yet associated with a proxy code) words identified by the word identifier 416 were assigned the highest frequency value and/or fall within the highest frequency value range. These words are then associated with the smallest available proxy codes by the proxy code selector 426 (block 808). The words identified by the word identifier 416, along with the associated proxy codes, are then stored in the memory 424 (block 810) as a code book 119. The proxy selector then determines if all of the words identified by the word identifier 416 have been assigned proxy code (block 812). If each of the identified words has been assigned a proxy code, the process of FIG. 8 terminates. Otherwise, control passes back to block 808, where the remaining word having the highest assigned frequency value is associated with the smallest available proxy code.

FIG. 9 is a block diagram of an example processor system 910 that may be used to implement the apparatus and methods described herein. As shown in FIG. 9, the processor system 910 includes a processor 912 that is coupled to an interconnection bus 914. The processor 912 may be any suitable processor, processing unit or microprocessor. Although not shown in FIG. 9, the system 910 may be a multi-processor system and, thus, may include one or more additional processors that are identical or similar to the processor 912 and that are communicatively coupled to the interconnection bus 914.

The processor 912 of FIG. 9 is coupled to a chipset 918, which includes a memory controller 920 and an input/output (I/O) controller 922. As is well known, a chipset typically provides I/O and memory management functions as well as a plurality of general purpose and/or special purpose registers, timers, etc. that are accessible or used by one or more processors coupled to the chipset 918. The memory controller 920 performs functions that enable the processor 912 (or processors if there are multiple processors) to access a system memory 924 and a mass storage memory 925.

The system memory 924 may include any desired type of volatile and/or non-volatile memory such as, for example, static random access memory (SRAM), dynamic random access memory (DRAM), flash memory, read-only memory (ROM), etc. The mass storage memory 925 may include any desired type of mass storage device including hard disk drives, optical drives, tape storage devices, etc.

The I/O controller 922 performs functions that enable the processor 912 to communicate with peripheral input/output (I/O) devices 926 and 928 and a network interface 930 via an I/O bus 932. The I/O devices 926 and 928 may be any desired type of I/O device such as, for example, a keyboard, a video display or monitor, a mouse, etc. The network interface 930 may be, for example, an Ethernet device, an asynchronous transfer mode (ATM) device, an 902.11 device, a DSL modem, a cable modem, a cellular modem, etc. that enables the processor system 910 to communicate with another processor system.

While the memory controller 920 and the I/O controller 922 are depicted in FIG. 9 as separate blocks within the chipset 918, the functions performed by these blocks may be integrated within a single semiconductor circuit or may be implemented using two or more separate integrated circuits.

Although certain systems, methods, apparatus, and articles of manufacture have been described herein, the scope of coverage of this patent is not limited thereto. To the contrary, this patent covers all methods, apparatus, and articles of manufacture fairly falling within the scope of the appended claims either literally or under the doctrine of equivalents.

**Claims**

1. A method of broadcasting, comprising:

selecting at least one word associated with a media composition;
representing the word with at least one phonetic notation;
obtaining a proxy code for each phonetic notation; and
locating the proxy code in a content-aware watermark.

**2.** A method as defined in claim 1, wherein the word is present in at least one of an audio track of the media composition, a closed captioning track of the media composition, an image of the media composition, or metadata of the media composition.

**3.** A method as defined in claim 1, wherein the word is representative of at least one of a product shown in the media composition, a person shown in the media composition, a character shown in the media composition, a topic discussed in the media composition, a type of product shown in the media composition, a brand shown in the media composition, a media feature, or a blank frame.

**4.** A method as defined in claim 1, further comprising encoding the content-aware watermark into the media composition or into a signal representative of the media composition, detecting the content-aware watermark at a media consumption site, extracting the proxy code from the detected watermark, converting the extracted proxy code to the at least one phonetic notation, and reassembling the word from the at least one phonetic notation.

**5.** A method as defined in claim 1, further comprising:

extracting the proxy code from the content-aware watermark;
determining the phonetic notation represented by the proxy code; and
converting the phonetic notation into at least one keyword.

**6.** A method as defined in claim 5, wherein determining the phonetic notation represented by the proxy code comprises looking up the proxy code in a code book having a set of correlations between a set of proxy codes and a set of phonetic notations.

**7.** A method as defined in claim 5, further comprising detecting a first indication indicative of a start of the keyword and detecting a second indication indicative of an end of the keyword, wherein the first and second indications are embedded in the content-aware watermark.

**8.** A method as defined in claim 1, further comprising:

identifying a word in the media composition;
searching through a set of media compositions to identify a number of instances of the word;
associating a frequency value with the word according to the number of instances of the word in relation to an amount of data in the set of media compositions;
selecting a proxy code based to be associated with the word based on the frequency value; and
storing the proxy code in association with the word in the code book.

**9.** A method as defined in claim 8, wherein selecting the proxy code comprises selecting one of a first set of proxy codes to be associated with the word when the frequency value is higher than a second frequency value associated with a second word, wherein the first set of proxy codes includes proxy codes of a smaller size compared to proxy codes of a second set of proxy codes.

**10.** A broadcast system, comprising:

a first data interface to receive a media composition;
a word selector to select at least one word associated with the media composition;
a first phonetic converter to represent the word with at least one phonetic notation;
a proxy code selector to obtain a proxy code for the at least one phonetic notation; and
a proxy code inserter to locate the proxy code in a watermark.

**11.** A system as defined in claim 10, further comprising an encoder to encode into the media composition or a signal representative of the media composition the watermark, wherein the at least one word is descriptive of content in the media composition data.

**12.** A system as defined in claim 10, further comprising a data extractor to extract the proxy code from the content-aware watermark; a translator to determine the at least one phonetic notation represented by the proxy code; and a converter to convert the at least one phonetic notation into at least one keyword.

**13.** A system as defined in claim 10, further comprising:

a word identifier to identify a word in the media composition;
a parser to search through a set of media compositions to identify a number of instances of the word;
a calculator to associated a frequency value with the word according to the number of instances of the word in relation to an amount of data in the set of media compositions;
a selector to select a proxy code to be associated with the word based on the frequency value; and
a memory to store the proxy code in association with the word in a code book.

**14.** A method of encoding a media composition, comprising:

selecting at least one word associated with the media composition, the word being descriptive of media content occurring at a first time within the media composition;
obtaining a proxy code associated with the word from a code book; and
inserting the proxy code into a portion of an audience measurement code containing a timestamp corresponding to the first time.

**15.** A method as defined in claim 14, wherein inserting the proxy code comprises at least one of appending the proxy code to a source identifier of the audience measurement code or prepending the proxy code to the source identifier of the audience measurement code.

**FIG. 1**

EP 2 211 301 A1

202

WATERMARK
EMBEDDER

226

CONTENT-AWARE
WATERMARK
ENCODER

206

PROXY CODE(a) => NEW YORK
PROXY CODE(b) => BUBBLEE
PROXY CODE(c) => SODA

CONTENT-AWARE
WATERMARK

208

CLOSED CAPTION TEXT:
"NEW YORK LOVES BUBBLEE BRAND SODA"

204

104

208

PROXY CODE(a) => NEW YORK
PROXY CODE(b) => BUBBLEE
PROXY CODE(c) => SODA

118

REFERENCE
DATABASE

KEYWORD
CODE BOOK

119b

PHONETIC
CODE BOOK

119a

**FIG. 2A**

210

|—————————212—————————|—————————216—————————|

| SOURCE IDENTIFIER<br>214 | TIMESTAMP<br>218 |

## FIG. 2B

220

|—————————212—————————|—————————216—————————|

| PROXY<br>CODE<br>208 | SOURCE IDENTIFIER<br>214 | TIMESTAMP<br>218 |

## FIG. 2C

222

|—————————212—————————|—————————216—————————|

| SOURCE IDENTIFIER<br>214 | PROXY<br>CODE<br>208 | TIMESTAMP<br>218 |

## FIG. 2D

224

|—————————212—————————|—————————216—————————|

| PROXY CODE<br>208 | TIMESTAMP<br>218 |

## FIG. 2E

104

302
DATA INTERFACE

310
MEDIA FEATURES DETECTOR

304
CLOSED CAPTION TEXT DECODER

312
WORD SELECTOR

306
SPEECH-TO-TEXT CONVERTER

314
PROXY CODE INSERTER

308
METADATA DETECTOR

316
PHONETIC CONVERTER

320
WATERMARK GENERATOR

318
PROXY CODE SELECTOR

FIG. 3

114 —

402 —

MEDIA INTERFACE

408
SIGNATURE
GENERATOR

404 —

WATERMARK
DETECTOR

410
DATA INTERFACE

406 —

DATA EXTRACTOR

412
TIMESTAMP
GENERATOR

414
PROXY CODE
TRANSLATOR

108
CENTRAL FACILITY

120
PHONETIC
CONVERTER

119
CODE BOOKS

**FIG. 4A**

415

416

WORD IDENTIFIER

420

MEDIA
COMPOSITION
PARSER

418

FREQUENCY
CALCULATOR

422

DATA INTERFACE

426

PROXY CODE
SELECTOR

424

MEMORY

119

## FIG. 4B

( START )

502 — RECEIVE MEDIA COMPOSITION DATA

B

504 — SELECT PORTION OF MEDIA DATA AND CREATE WATERMARK

506 — CREATE AUDIO TRACK-BASED KEYWORD(S)? — NO

YES

508 — DOES MEDIA DATA PORTION INCLUDE CLOSED CAPTION TEXT? — NO

YES

510 — RETRIEVE CLOSED CAPTION TEXT

512 — RETRIEVE AUDIO TRACK DATA

514 — PERFORM SPEECH-TO-TEXT CONVERSION

516 — SELECT KEYWORD(S)

518 — CREATE METADATA OR MEDIA FEATURE KEYWORDS? — NO

YES

520 — METADATA PRESENT IN MEDIA DATA? — NO

YES

522 — RETRIEVE METADATA FROM MEDIA DATA

524 — DETECT MEDIA FEATURES

526 — GENERATE KEYWORDS

528 — SELECT KEYWORD(S)

A

**FIG. 5A**

30

```
                            ┌───┐
                            │ A │
                            └─┬─┘
                              ▼
        NO   ╱────────────────────────────────╲   ┌─ 530
       ◄─────┤     KEYWORD(S) SELECTED?         ├──
             ╲────────────────────────────────╱
                            │ YES
                            ▼
        NO   ╱────────────────────────────────╲   ┌─ 532
       ◄─────┤  KEYWORD(S) TO BE PHONETICALLY   ├──
             │           ENCODED?               │
             ╲────────────────────────────────╱
                            │ YES
                            ▼
             ┌────────────────────────────────┐   ┌─ 534
             │ CONVERT KEYWORD(S) INTO PHONETIC│
             │ NOTATIONS AND SET PHONETIC      │
             │ INDICATOR                       │
             └────────────────────────────────┘
                            │
                            ▼
             ┌────────────────────────────────┐   ┌─ 536
             │      RETRIEVE PROXY CODE(S)     │
             └────────────────────────────────┘
                            │
                            ▼
             ╱────────────────────────────────╲   ┌─ 537
             ┤       PROXY CODE MISSING?        ├──
             ╲────────────────────────────────╱
                            │
                            ▼
             ┌────────────────────────────────┐   ┌─ 538
             │      ASSIGN NEW PROXY CODE      │
             └────────────────────────────────┘
                            │
                            ▼
             ┌────────────────────────────────┐   ┌─ 539
             │ INSERT PROXY CODE(S) IN WATERMARK│
             └────────────────────────────────┘
                            │
                            ▼
             ┌────────────────────────────────┐   ┌─ 540
             │ EMBED CONTENT-AWARE WATERMARK IN│
             │      MEDIA COMPOSITION          │
             └────────────────────────────────┘
                            │
                            ▼
             ╱────────────────────────────────╲   ┌─ 542    NO
             ┤    SELECT ANOTHER MEDIA DATA     ├─────────
             │           PORTION?               │
             ╲────────────────────────────────╱
                            │ YES               ┌─ 544
                            ▼
             ┌────────────────────────────────┐
             │ SELECT ANOTHER MEDIA DATA PORTION│
             └────────────────────────────────┘
                            │
             ┌───┐          ▼
             │ B │
             └───┘
                            ▼
             ┌────────────────────────────────┐   ┌─ 546
             │ STORE MEDIA COMPOSITION DATA IN │
             │           DATA STORE            │
             └────────────────────────────────┘
                            │
                            ▼
                       ╭─────────╮
                       │   END   │
                       ╰─────────╯
```

**FIG. 5B**

START

602

RECEIVE MEDIA COMPOSITION DATA

604

DETECT CONTENT-AWARE WATERMARK(S)

606

RETRIEVE UNIQUE IDENTIFIER(S) FROM WATERMARK(S)

608

GENERATE SIGNATURE(S)?  NO

YES

610

GENERATE SIGNATURE(S)

612

GENERATE TIMESTAMP(S)

614

STORE DATA

615

PERFORM PROXY CODE LOOKUPS

616

COMMUNICATE DATA TO CENTRAL FACILITY

END

**FIG. 6**

START

RECEIVE CONTENT-DESCRIPTIVE
INFORMATION FROM DECODER — 700

PHONETIC CONVERSION NEEDED? — 702 NO

YES

PERFORM PHONETIC CONVERSION — 704

CONVEY REASSEMBLED KEYWORD(S) TO
ANALYSIS SERVER — 706

END

**FIG. 7**

START

IDENTIFY WORDS TO BE ASSIGNED PROXY CODES  ⟋ 800

RECEIVE SET OF MEDIA COMPOSITIONS  ⟋ 802

PARSE THROUGH MEDIA COMPOSITIONS TO IDENTIFY OCCURRENCES OF WORDS  ⟋ 804

ASSIGN FREQUENCY OF OCCURRENCE VALUE TO IDENTIFIED WORD(S)  ⟋ 806

ASSOCIATE SMALLEST AVAILABLE PROXY CODE WITH REMAINING WORD HAVING HIGHEST FREQUENCY VALUE  ⟋ 808

STORE PROXY CODE IN ASSOCIATION WITH WORD  ⟋ 810

ALL IDENTIFIED WORDS ASSOCIATED WITH A PROXY CODE?  ⟋ 812    NO

YES

END

FIG. 8

910

912

PROCESSOR

914

926

I/O
DEVICE

922

918

I/O
CONTROLLER

MEMORY
CONTROLLER

920

932

930

I/O
DEVICE

NETWORK
INTERFACE

928

SYSTEM
MEMORY

MASS STORAGE
MEMORY

924

925

**FIG. 9**

| | Europäisches Patentamt European Patent Office Office européen des brevets | **EUROPEAN SEARCH REPORT** | Application Number EP 10 00 0776 |
|---|---|---|---|

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| X | US 2007/274611 A1 (RODRIGUEZ TONY F [US] ET AL) 29 November 2007 (2007-11-29) * paragraph [0014] * * paragraph [0058] * * paragraph [0080] * * paragraph [0084] * * paragraph [0099] - paragraph [0100] * * paragraph [0164] - paragraph [0170] * ----- | 1-15 | INV. G06Q30/00 |
| A | WO 02/37498 A2 (KONINKL PHILIPS ELECTRONICS NV [NL]) 10 May 2002 (2002-05-10) * page 2, line 16 - page 3, line 20 * * page 8, line 14 - line 24 * ----- | 1-15 | |
| A | US 2004/006469 A1 (KANG HYUN-SEOK [KR]) 8 January 2004 (2004-01-08) * paragraph [0005] - paragraph [0009] * ----- | 1-15 | |
| A | US 2004/078188 A1 (GIBBON DAVID CRAWFORD [US] ET AL) 22 April 2004 (2004-04-22) * abstract * ----- | 1-15 | TECHNICAL FIELDS SEARCHED (IPC) G06Q |

The present search report has been drawn up for all claims

| Place of search | Date of completion of the search | Examiner |
|---|---|---|
| The Hague | 8 April 2010 | Moser, Raimund |

## ANNEX TO THE EUROPEAN SEARCH REPORT
## ON EUROPEAN PATENT APPLICATION NO.

EP 10 00 0776

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2010

| Patent document cited in search report | Publication date | Patent family member(s) | | Publication date |
|---|---|---|---|---|
| US 2007274611 A1 | 29-11-2007 | NONE | | |
| WO 0237498 A2 | 10-05-2002 | CN | 1404609 A | 19-03-2003 |
| | | EP | 1332497 A2 | 06-08-2003 |
| | | JP | 2004513547 T | 30-04-2004 |
| | | US | 6973256 B1 | 06-12-2005 |
| US 2004006469 A1 | 08-01-2004 | KR | 20040001594 A | 07-01-2004 |
| US 2004078188 A1 | 22-04-2004 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61147363 A
- US 101738 A
- US 98672307 P
- US 53479006 A